(19) **Europäisches Patentamt**
**European Patent Office**
**Office européen des brevets**

(11) **EP 4 730 686 A1**

(12) **EUROPEAN PATENT APPLICATION**
published in accordance with Art. 153(4) EPC

(43) Date of publication:
**22.04.2026 Bulletin 2026/17**

(21) Application number: **24842198.4**

(22) Date of filing: **03.07.2024**

(51) International Patent Classification (IPC):
***H04L 5/00*** (2006.01)

(52) Cooperative Patent Classification (CPC):
**H04L 5/00; H04W 72/044; H04W 72/0446;**
**H04W 72/231; H04W 72/232**

(86) International application number:
**PCT/CN2024/103325**

(87) International publication number:
**WO 2025/016202 (23.01.2025 Gazette 2025/04)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **17.07.2023 CN 202310879459**

(71) Applicant: **Huawei Technologies Co., Ltd.**
**Shenzhen, Guangdong 518129 (CN)**

(72) Inventors:
• **FAN, Bo**
**Shenzhen, Guangdong 518129 (CN)**
• **LIU, Fengwei**
**Shenzhen, Guangdong 518129 (CN)**
• **QIU, Jing**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **RESOURCE UPDATE METHOD AND RELATED APPARATUS**

(57)    A resource update method and a related apparatus are provided. The method includes: receiving an RRC message from a network device, where the RRC message is used for configuring at least one reference signal resource group, and each of the at least one reference signal resource group includes at least one reference signal resource; and receiving a resource update message from the network device, where the resource update message is used for updating information about a reference signal resource in N reference signal resource groups in the at least one reference signal resource group, N is a positive integer, and the resource update message is DCI or a MAC-CE. In comparison with an RRC message, updating information about a reference signal resource by using DCI or a MAC-CE causes lower latency, so that the network device can indicate updated information about the reference signal resource to a terminal device in a timely manner, to facilitate the terminal device in adjusting a reception beam in a timely manner, improving transmission performance.

<u>500</u>

| Network device | | Terminal device |
| --- | --- | --- |

510: RRC message, where the RRC message is used for configuring at least one reference signal resource group

520: Resource update message, where the resource update message is used for updating information about a reference signal resource in N reference signal resource groups in the at least one reference signal resource group

FIG. 5

**Description**

This application claims priority to Chinese Patent Application No. 202310879459.2, filed with the China National Intellectual Property Administration on July 17, 2023 and entitled "RESOURCE UPDATE METHOD AND RELATED APPARATUS", which is incorporated herein by reference in its entirety.

**TECHNICAL FIELD**

This application relates to the communication field, and in particular, to a resource update method and a related apparatus.

**BACKGROUND**

A specific beam may be used for communication between a network device and a terminal device, and the specific beam to be used is determined through beam measurement. For example, the network device may send reference signals by using different beams, and each beam corresponds to one reference signal. The terminal device determines a beam of good quality based on measurement of the received reference signals.

To reduce measurement complexity and overheads, two-stage beam management may be used. Measurement of a downlink reference signal is used as an example. The network device may configure a plurality of synchronization signal block (synchronization signal block, SSB) resources for the terminal device, and each SSB resource corresponds to one wide beam. The network device sends corresponding SSBs by using wide beams respectively. The terminal device determines and reports a wide beam of good quality based on measurement of the SSBs. Further, the network device configures, based on the wide beams, a plurality of channel state information reference signal (channel state information reference signal, CSI-RS) resources for the terminal device, and each CSI-RS resource corresponds to one narrow beam, that is, the wide beam is refined as narrow beams. The network device sends corresponding CSI-RSs by using the narrow beams respectively. The terminal device determines and reports a narrow beam of good quality based on measurement of the CSI-RSs.

When a group of narrow beams to be measured by the terminal device changes (for example, the narrow beams change due to a change in a location of the terminal device), the network device may update, by using a radio resource control (radio resource control, RRC) message, information about the CSI-RS resource such as a beam, frequency domain information, and time domain information corresponding to the CSI-RS resource. However, because the RRC message is higher-layer signaling, and is delivered with high latency, the network device cannot indicate updated information about the CSI-RS resource to the terminal device in a timely manner. As a result, the terminal device cannot select an appropriate beam for receiving in a timely manner, leading to a transmission performance loss.

**SUMMARY**

This application provides a resource update method and a related apparatus, to lower latency and improve transmission performance.

According to a first aspect, this application provides a resource update method. The method may be performed by a terminal device, may be performed by a component (for example, a chip or a chip system) configured in the terminal device, or may be implemented by a logical module or software that can implement all or some of functions of the terminal device. This is not limited in this application.

For example, the method includes: receiving an RRC message from a network device, where the RRC message is used for configuring at least one reference signal resource group (resource group), and each of the at least one reference signal resource group includes at least one reference signal resource; and receiving a resource update message from the network device, where the resource update message is used for updating information about a reference signal resource in N reference signal resource groups in the at least one reference signal resource group, N is a positive integer, and the resource update message is downlink control information (downlink control information, DCI) or a medium access control (medium access control, MAC)-control element (control element, CE).

In the foregoing technical solution, the DCI or the MAC-CE is used for updating the information about the reference signal resource in the N reference signal resource groups in the at least one reference signal resource group configured in the RRC message. In comparison with the RRC message, for the DCI and the MAC-CE, latency is lower. In this way, the network device can indicate updated information about the reference signal resource to the terminal device in a timely manner, to facilitate the terminal device in adjusting a reception beam in a timely manner, improving transmission performance.

With reference to the first aspect, in some possible implementations of the first aspect, before receiving the resource update message from the network device, the method further includes: sending terminal capability information to the network device, where the terminal capability information indicates one or more of the following: whether updating, by using the resource update message, the information about the reference signal resource in the N reference signal resource groups is supported; whether indicating, by using the resource update message, one piece of corresponding beam information for each of the N reference signal resource groups is supported; whether indicating, by using the resource update message, one piece of corresponding beam information for each reference signal resource included in the N reference signal resource groups is supported; whether indicating, by using the resource update message, one piece of corresponding slot information for each of the N reference signal resource groups is supported; whether indicating, by using the resource update message, one piece of corresponding slot information for each reference signal resource included in the N reference signal resource groups is supported; a supported value of N; whether a variable value of N is supported; or whether using a common beam for the reference signal resource in the N reference signal resource groups is supported.

The terminal device may report one or more pieces of the terminal capability information, so that the network device properly updates the reference signal resource for the terminal device based on the terminal capability information reported by the terminal device. For example, when the terminal device supports updating the information about the reference signal resource in the N reference signal resource groups by using the resource update message, the network device may update the information about the reference signal resource in this manner.

According to a second aspect, this application provides a resource update method. The method may be performed by a network device, may be performed by a component (for example, a chip or a chip system) configured in the network device, or may be implemented by a logical module or software that can implement all or some of functions of the network device. This is not limited in this application.

For example, the method includes: sending an RRC message to a terminal device, where the RRC message is used for configuring at least one reference signal resource group, and each of the at least one reference signal resource group includes at least one reference signal resource; and sending a resource update message to the terminal device, where the resource update message is used for updating information about a reference signal resource in N reference signal resource groups in the at least one reference signal resource group, N is a positive integer, and the resource update message is DCI or a MAC-CE.

In the foregoing technical solution, the DCI or the MAC-CE is used for updating the information about the reference signal resource in the N reference signal resource groups in the at least one reference signal resource group configured in the RRC message. In comparison with the RRC message, for the DCI and the MAC-CE, latency is lower. In this way, the network device can indicate updated information about the reference signal resource to the terminal device in a timely manner, to facilitate the terminal device in adjusting a reception beam in a timely manner, improving transmission performance.

With reference to the second aspect, in some possible implementations of the second aspect, before sending the RRC message to the terminal device, the method further includes: receiving terminal capability information, where the terminal capability information indicates one or more of the following: whether updating, by using the resource update message, the information about the reference signal resource in the N reference signal resource groups is supported; whether indicating, by using the resource update message, one piece of corresponding beam information for each of the N reference signal resource groups is supported; whether indicating, by using the resource update message, one piece of corresponding beam information for each reference signal resource included in the N reference signal resource groups is supported; whether indicating, by using the resource update message, one piece of corresponding slot information for each of the N reference signal resource groups is supported; whether indicating, by using the resource update message, one piece of corresponding slot information for each reference signal resource included in the N reference signal resource groups is supported; a supported value of N; whether a variable value of N is supported; or whether using a common beam for the reference signal resource in the N reference signal resource groups is supported.

With reference to the first aspect and the second aspect, in some possible implementations, the resource update message indicates at least one of the following: information used for determining the value of N; indexes of the N reference signal resource groups; beam information of the reference signal resource in the N reference signal resource groups; whether the resource update message indicates beam information of the reference signal resource in the N reference signal resource groups; slot information of the reference signal resource in the N reference signal resource groups; or periodicity information of the reference signal resource in the N reference signal resource groups.

With reference to the first aspect and the second aspect, in some possible implementations, the beam information of the reference signal resource in the N reference signal resource groups is indicated in any one of the following manners: a first beam indication manner or a second beam indication manner; and when the first beam indication manner is used for the resource update message, one piece of corresponding beam information is indicated for each of the N reference signal resource groups; or when the second beam indication manner is used for the resource update message, one piece of corresponding beam information is indicated for each reference signal resource included in the N reference signal resource groups.

The network device may indicate the beam information of the reference signal resource in the N reference signal resource groups in the first beam indication manner or the second beam indication manner. This is more flexible than using a single beam indication manner.

That one piece of corresponding beam information is indicated for each of the N reference signal resource groups may be understood as that, when a reference signal is transmitted based on all reference signal resources in a specific reference signal resource group, an indicated beam corresponding to the reference signal resource group may be used. That one piece of corresponding beam information is indicated for each reference signal resource included in the N reference signal resource groups may be understood as that, when a reference signal is transmitted based on each reference signal resource in the N reference signal resource groups, a beam corresponding to the reference signal resource may be used.

With reference to the first aspect and the second aspect, in some possible implementations, the resource update message further indicates a beam indication manner, and the beam indication manner includes the first beam indication manner or the second beam indication manner.

To be specific, the network device may indicate, to the terminal device, which beam indication manner to use for indicating the beam information of the reference signal resource in the N reference signal resource groups. In this way, the network device and the terminal device align on the beam indication manner, so that the terminal device correctly reads the beam information of the reference signal resource.

With reference to the first aspect and the second aspect, in some possible implementations, the slot information of the reference signal resource in the N reference signal resource groups is indicated in any one of the following manners: a first slot indication manner or a second slot indication manner; and when the first slot indication manner is used for the resource update message, one piece of corresponding slot information is indicated for each of the N reference signal resource groups; or when the second slot indication manner is used for the resource update message, one piece of corresponding slot information is indicated for each reference signal resource included in the N reference signal resource groups.

The network device may indicate the slot information of the reference signal resource in the N reference signal resource groups in the first slot indication manner or the second slot indication manner. This is more flexible than using a single slot indication manner.

That one piece of corresponding slot information is indicated for each of the N reference signal resource groups may be understood as that, when a reference signal is transmitted based on all reference signal resources in a specific reference signal resource group, indicated slot information corresponding to the reference signal resource group may be used. That one piece of corresponding slot information is indicated for each reference signal resource included in the N reference signal resource groups may be understood as that, when a reference signal is transmitted based on each reference signal resource in the N reference signal resource groups, slot information corresponding to the reference signal resource may be used.

With reference to the first aspect and the second aspect, in some possible implementations, the resource update message further indicates a slot indication manner, and the slot indication manner includes the first slot indication manner or the second slot indication manner.

To be specific, the network device may indicate, to the terminal device, which slot indication manner to use for indicating the slot information of the reference signal resource in the N reference signal resource groups. In this way, the network device and the terminal device align on the slot indication manner, so that the terminal device correctly reads the slot information of the reference signal resource.

With reference to the first aspect and the second aspect, in some possible implementations, the slot information is a relative slot offset; and when the first slot indication manner is used for the resource update message, a relative slot offset corresponding to each reference signal resource group is used for updating slot positions of all reference signal resources in the reference signal resource group; or when the second slot indication manner is used for the resource update message, a relative slot offset corresponding to each reference signal resource is used for updating a slot position of the reference signal resource.

With reference to the first aspect and the second aspect, in some possible implementations, the periodicity information of the reference signal resource in the N reference signal resource groups is indicated in any one of the following manners: a first periodicity indication manner or a second periodicity indication manner; and when the first periodicity indication manner is used for the resource update message, one piece of corresponding periodicity information is indicated for each of the N reference signal resource groups; or when the second periodicity indication manner is used for the resource update message, one piece of corresponding periodicity information is indicated for all reference signal resources included in the N reference signal resource groups.

That one piece of corresponding periodicity information is indicated for each of the N reference signal resource groups may be understood as that periodicities of all reference signal resources in a specific reference signal resource group are indicated periodicities corresponding to the reference signal resource group. That one piece of corresponding periodicity information is indicated for all the reference signal resources included in the N reference signal resource groups may be understood as that all the reference signal resources in the N reference signal resource groups share one periodicity.

With reference to the first aspect and the second aspect, in some possible implementations, the RRC message is further used for configuring one or more of the following: whether the information about the reference signal resource in the N reference signal resource groups is updated by using the resource update message; whether the resource update message indicates one piece of corresponding beam information for each of the N reference signal resource groups; whether the resource update message indicates one piece of corresponding beam information for each reference signal resource included in the N reference signal resource groups; whether the resource update message indicates one piece of corresponding slot information for each of the N reference signal resource groups; whether the resource update message indicates one piece of corresponding slot information for each reference signal resource included in the N reference signal resource groups; the supported value of N; whether a variable value of N is supported; or whether the common beam is used for the reference signal resource in the N reference signal resource groups.

According to a third aspect, this application provides a communication apparatus, to implement the method according to any one of the first aspect and the possible implementations of the first aspect or the method according to any one of the second aspect and the possible implementations of the second aspect. The apparatus includes corresponding units configured to perform the foregoing methods. The unit included in the apparatus may be implemented by software and/or hardware.

According to a fourth aspect, this application provides a communication apparatus. The apparatus includes a processor. The processor is coupled to a memory, and may be configured to execute a computer program in the memory, to implement the method according to any one of the first aspect and the possible implementations of the first aspect or the method according to any one of the second aspect and the possible implementations of the second aspect.

Optionally, the apparatus further includes a communication interface, and the processor is coupled to the communication interface. The communication interface is configured to receive a signal from a communication device other than the device and transmit the signal to the processor, or send a signal from the processor to a communication device other than the device. For example, the communication interface may be a transceiver, a circuit, a bus, a module, or a communication interface of another type.

Optionally, the apparatus further includes the memory, and the processor is coupled to the memory. The memory is configured to store program instructions and data.

According to a fifth aspect, this application provides a computer-readable storage medium. The computer-readable storage medium stores a computer program or instructions. When the computer program or the instructions are executed, the method according to any one of the first aspect and the possible implementations of the first aspect or the method according to any one of the second aspect and the possible implementations of the second aspect is implemented.

According to a sixth aspect, this application provides a computer program product. The computer program product includes instructions. When the instructions are run, the method according to any one of the first aspect and the possible implementations of the first aspect or the method according to any one of the second aspect and the possible implementations of the second aspect is implemented.

According to a seventh aspect, this application provides a chip system. The chip system includes at least one processor, configured to support implementation of a function in any one of the first aspect and the possible implementations of the first aspect, or configured to support implementation of a function in any one of the second aspect and the possible implementations of the second aspect, for example, receiving or processing data in the foregoing methods.

In a possible design, the chip system further includes a memory, the memory is configured to store program instructions and data, and the memory is located inside or outside the processor.

The chip system may include a chip, or may include a chip and another discrete device.

According to an eighth aspect, this application provides a communication system. The communication system includes: a terminal device, configured to perform the method according to any one of the first aspect and the possible implementations of the first aspect; and a network device, configured to perform the method according to any one of the second aspect and the possible implementations of the second aspect.

It should be understood that technical solutions of the third aspect to the eighth aspect of this application correspond to the technical solutions of the first aspect and the second aspect of this application, and beneficial effects achieved by the aspects and corresponding feasible implementations are similar. Details are not described herein again.

**BRIEF DESCRIPTION OF DRAWINGS**

FIG. 1 is a schematic flowchart of beam management according to an embodiment of this application;

FIG. 2 is a diagram of an existing resource update process according to an embodiment of this application;

FIG. 3 is a diagram of a system architecture of a communication system according to an embodiment of this application;

FIG. 4 is a diagram of communication performed by a communication apparatus according to an embodiment of this application;

FIG. 5 is a schematic flowchart of a resource update method according to an embodiment of this application;

FIG. 6 is a detailed schematic flowchart of a resource update method according to an embodiment of this application;
FIG. 7 is a block diagram of a communication apparatus according to an embodiment of this application;
FIG. 8 is another block diagram of a communication apparatus according to an embodiment of this application;
FIG. 9 is a diagram of a structure of a network device according to an embodiment of this application; and
FIG. 10 is a diagram of a structure of a terminal device according to an embodiment of this application.

## DESCRIPTION OF EMBODIMENTS

The following describes technical solutions of this application with reference to the accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a sidelink (sidelink) communication system, a universal mobile telecommunications system (universal mobile telecommunications system, UMTS), a worldwide interoperability for microwave access (worldwide interoperability for microwave access, WiMAX) communication system, a 5th generation (5th generation, 5G) mobile communication system, or a new radio access technology (new radio access technology, NR). The 5G mobile communication system may include non-standalone (non-standalone, NSA) networking and/or standalone (standalone, SA) networking.

The technical solutions provided in this application may be further applied to a future communication system, for example, a 6th generation (6th Generation, 6G) mobile communication system. This is not limited in this application.

The following first describes network elements in embodiments of this application: a network device and a terminal device.

In embodiments of this application, the network device may be any device having a wireless transceiver function. The network device includes, but is not limited to, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB or a transmission point (TRP or TP) in a 5G system (for example, an NR system), or one antenna panel or a group of antenna panels (including a plurality of antenna panels) of a base station in a 5G system, or may be a network node that forms a gNB or a transmission point, for example, a baseband unit (BBU) or a distributed unit (distributed unit, DU). The network device may alternatively be a radio controller in a cloud radio access network (cloud radio access network, CRAN) scenario. Alternatively, the network device may be a wearable device or a vehicle-mounted device.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data connectivity, for example, a handheld device or a vehicle-mounted device that has a wireless connection function. Currently, some examples of the terminal device may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), an uncrewed aerial vehicle, a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), and the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to work with other devices such as smartphones, for example, various smart bands or smart jewelry for monitoring physical signs.

In addition, the terminal device may alternatively be a terminal device in an internet of things (internet of things, IoT) system. An IoT is an important part in future development of information technologies. A main technical feature of the IoT is to connect an object to a network by using a communication technology, to implement an intelligent network for human-machine interconnection and thing-thing interconnection. The IoT technology can implement massive connections, deep coverage, and terminal power saving by using, for example, a narrow band (narrow band, NB) technology.

In addition, the terminal device may further include a sensor, for example, an intelligent printer, a train detector, or a gas station. Main functions of the terminal device include collecting data (some terminal devices), receiving control information and downlink data from the network device, sending an electromagnetic wave, and transmitting uplink data to the network device.

It should be understood that specific forms of the network device and the terminal device are not limited in this application.

To better understand the methods provided in embodiments of this application, the following briefly describes terms in this application.

1. A beam: The beam may be understood as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (Quasi-colocation, QCL) information, a QCL assumption, a QCL indication, a transmission configuration indicator (transmission configuration indicator, TCI) state (state), a spatial relation (spatial relation), or the like. Therefore, in this application, concepts such as the beam, the spatial domain filter, the spatial filter, the spatial domain parameter, the spatial parameter, the spatial domain setting, the spatial setting, the QCL information, the QCL assumption, the QCL indication, the TCI state (including an uplink TCI state or a downlink TCI state), or the spatial relation are equivalent. The foregoing concepts may be used interchangeably.

A beam used for sending a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), or a spatial domain transmission setting (spatial domain transmission setting), or a spatial transmission setting (spatial transmission setting). A downlink transmission beam may be indicated by using a downlink TCI-state.

A beam used for receiving a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), a spatial reception setting (spatial reception setting), or the like.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

Optionally, a plurality of beams having same or similar communication features are considered as one beam. One beam may include one or more antenna ports, configured to transmit a data channel, a control channel, a sounding signal, and the like. The one or more antenna ports forming the beam may also be considered as one antenna port set.

2. A reference signal and a reference signal resource: The reference signal may be used for channel measurement, channel estimation, beam measurement, or the like. The reference signal resource may be used for configuring a transmission attribute of the reference signal, for example, a time-frequency resource position, a port mapping relationship, a power factor, and a scrambling code. A transmitter device may send the reference signal based on the reference signal resource, and a receiver device may receive the reference signal based on the reference signal resource.

In beam measurement, there is a correspondence between a beam and a reference signal resource. The reference signal resource may be an uplink reference signal resource or a downlink reference signal resource. The uplink reference signal includes, but is not limited to, a sounding reference signal (sounding reference signal, SRS) and a demodulation reference signal (demodulation reference signal, DMRS). The downlink reference signal includes, but is not limited to, a CSI-RS, a cell-specific reference signal (cell-specific reference signal, CS-RS), a user equipment-specific reference signal (user equipment-specific reference signal, US-RS), a demodulation reference signal (demodulation reference signal, DMRS), and a synchronization signal/physical broadcast channel block (synchronization signal/physical broadcast channel block, SS/PBCH block). The SS/PBCH block may be referred to as an SSB for short.

The reference signal resource is configured by using an RRC message. In terms of a configuration structure, a resource is an information element (information element, IE), including a related parameter of an uplink/a downlink reference signal corresponding to the resource, for example, a type of the uplink/downlink reference signal, a resource element carrying the uplink/-downlink reference signal, sending time and a periodicity of the uplink/downlink reference signal, and a quantity of ports used for sending the uplink/downlink reference signal. Each uplink/downlink reference signal resource has a unique index to identify the reference signal resource. It may be understood that an index of a reference signal resource may also be referred to as an identifier of the reference signal resource. This is not limited in embodiments of this application.

In addition, in this application, a parameter used for measuring beam quality includes received signal strength (received signal strength indicator, RSSI), reference signal received power (reference signal received power, RSRP), and the like, but this is not limited herein. For example, the beam quality may alternatively be measured based on parameters such as reference signal received quality (reference signal received quality, RSRQ), a signal-to-noise ratio (signal-to-noise ratio, SNR), a signal to interference plus noise ratio (signal to interference plus noise ratio, SINR, signal to interference plus noise ratio for short), a precoding matrix indicator (precoding matrix indicator, PMI), a transmitted precoding matrix indicator (transmitted precoding matrix indicator, TPMI), a rank indicator (rank indicator, RI), a transmitted rank indicator (transmitted rank indicator, TRI), a layer indicator (layer indicator, LI), and a timing advance (timing advance, TA).

It should be understood that the reference signal and the corresponding reference signal resource listed above are merely examples for description, and should not constitute any limitation on this application. This application does not exclude a possibility of defining another reference signal in a future protocol to implement a same or similar function.

3. TCI state: During uplink and downlink transmission, both a network device and a terminal device need to use a correct beam to implement optimal transmission. During downlink transmission, the network device needs to indicate, to the terminal device, which downlink transmission beam is being used by the network device, so that the terminal device knows which reception beam to use for receiving. During uplink transmission, the network device also needs to indicate, to the terminal device, which uplink transmission beam needs to be used by the terminal device, as the network device knows which beam is optimal for the terminal device. Both an uplink beam and a downlink beam may be indicated by using a TCI state. For example, a beam used for downlink transmission is indicated by using a downlink TCI state, and a beam used for uplink transmission is indicated by using an uplink TCI state. In the 3rd generation partnership project (3rd generation partnership project, 3GPP) protocol, the network device indicates a specific TCI state to the terminal device by using a TCI field in downlink control information (downlink control information, DCI). The TCI field has a size of 3 bits (bit), and may specifically represent 8 different field values (codepoint). Each field value of the TCI field may be associated with one TCI state index. The TCI state index may uniquely identify one TCI state, and the TCI state may be a downlink TCI state or an uplink TCI state. Alternatively, each field value of the TCI field may be associated with two TCI state indexes. The two TCI state indexes may uniquely identify two TCI states. The two TCI states may be one downlink TCI state and one uplink TCI state, or may be two downlink TCI states or two uplink TCI states.

The downlink TCI state includes several parameters, and the terminal device may determine, based on the parameters, related information about a downlink transmission beam, to determine a reception beam to be used. The TCI state is configured by the network device for each terminal device. Each TCI state includes a TCI state index "tci-StateId" and two pieces of "QCL-Info". Each piece of "QCL-Info" includes one reference signal resource, to indicate that a same downlink timing, frequency offset, or reception beam as that for the reference signal resource should be used in downlink transmission in the TCI state. A specific one to be used depends on a type of "QCL-Info", that is, another field "qcl-Type" of "QCL-Info". "qcl-Type" may have four values: typeA, typeB, typeC, or typeD. If the type is typeA, typeB, or typeC, same downlink timing information and frequency offset information as those for the reference signal resource should be used in downlink transmission in the TCI state. If the type is typeD, the same reception beam as that for the reference signal resource should be used in downlink transmission in the TCI state. In the two pieces of "QCL-Info", a type of one piece of "QCL-Info" is typeD, and a type of the other piece of "QCL-Info" is typeA, typeB, or typeC. The terminal device may determine, based on "QCL-Info" of typeD, which reception beam is used for receiving in corresponding downlink transmission. Specifically, the following steps are performed.

(1) The network device indicates a downlink TCI state (indicated by a TCI field) in downlink transmission to the terminal device based on DCI.
(2) The terminal device determines a reference signal resource in "QCL-Info" of typeD in the TCI state.
(3) Determine a reception beam corresponding to the downlink transmission as a reception beam for the reference signal resource. It should be understood that, through a beam management procedure, the terminal device may determine an optimal reception beam for receiving the reference signal resource, and may use the reception beam as the reception beam for the reference signal resource.

Similarly, an uplink TCI state includes one reference signal resource, to indicate that a same uplink transmission beam as that for the reference signal resource should be used in uplink transmission in the TCI state. The terminal device may determine, based on the reference signal resource, which transmission beam is used for sending in corresponding uplink transmission. In the uplink TCI state, the reference signal resource is not included in "QCL-Info", and QCL types are not distinguished. This is because: There is no need to reference uplink timing information and frequency offset information, and only an uplink transmission beam needs to be referenced. Specifically, the following steps are performed.

(1) The network device indicates an uplink TCI state (indicated by a TCI field) in downlink transmission to the terminal device based on DCI.
(2) The terminal device determines a reference signal resource in the TCI state.
(3) Determine a transmission beam corresponding to the uplink transmission as a transmission beam for the reference signal resource.

It should be understood that, for structures of the uplink TCI state and the downlink TCI state, refer to a known protocol. Details are not described herein.

4. Beam management

The beam management may be classified into downlink beam management and uplink beam management.

(1) Downlink beam management

Downlink beam management mainly includes the following steps.

S1: A network device sends measurement configuration information to a terminal device. The network device sends the measurement configuration information to the terminal device by using an RRC message, and the measurement configuration information mainly includes two parts: resource configuration information and reporting configuration information. The resource configuration information is information related to a reference signal resource, and is configured by using a three-level structure (resource configuration (resource-Config)-resource set (resource set)-resource (resource)) in a protocol. The network device may configure one or more resource configurations (also referred to as "resourceSetting") for the terminal device. Each resource configuration includes one or more resource sets, and each resource set may include one or more resources. Each resource configuration/resource set/resource includes an index of its own. In addition, some other parameters are further included, for example, a resource periodicity and a signal type corresponding to the resource. The reporting configuration information is information related to reporting of a measurement result, and is configured through a reporting configuration (ReportConfig) in a protocol. The network device may configure one or more reporting configurations for the terminal device. Each reporting configuration includes reporting-related information such as a reporting indicator, reporting time, a reporting periodicity, and a reporting format. In addition, the reporting configuration further includes an index of the resource configuration, and the index indicates a measurement configuration based on which a reported result is obtained through measurement. For specific formats of the resource configuration and the reporting configuration, refer to a known protocol. Details are not described herein.

S2: The network device sends a downlink reference signal on a resource element corresponding to a resource configured based on the resource configuration information, so that the terminal device determines quality of each resource (or quality of a reference signal, or quality of a beam corresponding to the resource) by measuring the downlink reference signal.

S3: The terminal device measures the downlink reference signal based on the measurement configuration information.

S4: The terminal device sends a beam measurement report to the network device. The beam measurement report may include indexes of one or more resources, resource quality, and the like. Table 1 shows a report format used for beam measurement in the R15 protocol. A CSI-RS index (CSI-RS index, CRI) field and an SSB resource index (SSB resource index, SSBRI) field indicate to-be-reported resource indexes. A CRI or an SSBRI may be reported individually, or both may be reported. $\left\lceil \log_2 \left( K_s^{\mathrm{CSI-RS}} \right) \right\rceil$ and $\left\lceil \log_2 \left( K_s^{\mathrm{SSB}} \right) \right\rceil$ are lengths of the CRI field and the SSBRI field. RSRP represents resource quality. The RSRP is reported by using a differential reporting criterion. To be specific, RSRP of an optimal resource (an RSRP field in Table 1) is reported through 7-bit quantization, and another RSRP (differential RSRP in Table 1) field is reported through 4-bit quantization.

Table 1

| Field (field) | Length (bit width) |
|---|---|
| CRI | $\left\lceil \log_2 \left( K_s^{\mathrm{CSI-RS}} \right) \right\rceil$ |
| SSBRI | $\left\lceil \log_2 \left( K_s^{\mathrm{SSB}} \right) \right\rceil$ |
| RSRP | 7 |
| Differential RSRP | 4 |

The information may be carried on a physical uplink control channel (physical uplink control channel) or a physical uplink shared channel (physical uplink shared channel).

(2) Uplink beam management

Uplink beam management mainly includes the following steps.

S1: A network device sends SRS configuration information to a terminal device. The network device may configure, for the terminal device, one or more SRS resource sets (SRS resource set) used for uplink beam management, where each SRS resource set includes one or more SRS resources (SRS resource). Each SRS resource is associated with one beam. Each SRS resource includes one SRS signal, and uplink beam measurement may be performed by measuring SRS signals corresponding to the SRS resources. For a specific format of a configuration of the SRS resource, refer to a known protocol. Details are not described herein.

S2: The terminal device sends, based on a configuration of each SRS resource, a corresponding SRS signal by using an uplink transmission beam associated with the SRS resource.

S3: The network device measures each SRS signal sent by the terminal device, to measure quality of each SRS resource.

It can be learned from a beam management process that a specific beam may be used for communication between the network device and the terminal device, and the specific beam to be used is determined through beam measurement. For example, the network device may send reference signals by using beams, and each beam corresponds to one reference signal. The terminal device determines a beam of good quality based on measurement of the reference signals.

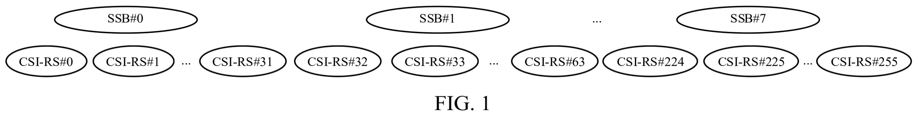

To reduce measurement complexity and overheads, two-stage beam management may be used. The following describes two-stage beam management in detail with reference to FIG. 1.

FIG. 1 is a schematic flowchart of beam management according to an embodiment of this application.

As shown in FIG. 1, a network device may configure a plurality of SSB resources (for example, SSB#0, SSB#1, ..., and SSB#7) for a terminal device. Each SSB resource corresponds to one wide beam. The network device sends corresponding SSBs by using wide beams respectively. The terminal device determines and reports a wide beam of good quality based on measurement of the SSBs. Further, the network device configures a plurality of CSI-RS resources for the terminal device based on the wide beams. Each CSI-RS resource corresponds to one narrow beam. To be specific, the wide beam is refined as narrow beams, for example, a wide beam corresponding to SSB#0 is refined as narrow beams corresponding to CSI-RS#0 to CSI-RS#31, a wide beam corresponding to SSB#1 is refined as narrow beams corresponding to CSI-RS#32 to CSI-RS#63, ..., and a wide beam corresponding to SSB#7 is refined as narrow beams corresponding to CSI-RS#224 to CSI-RS#255. The network device sends corresponding CSI-RSs by using the narrow beams respectively, and the terminal device determines and reports a narrow beam of good quality based on measurement of the CSI-RSs.

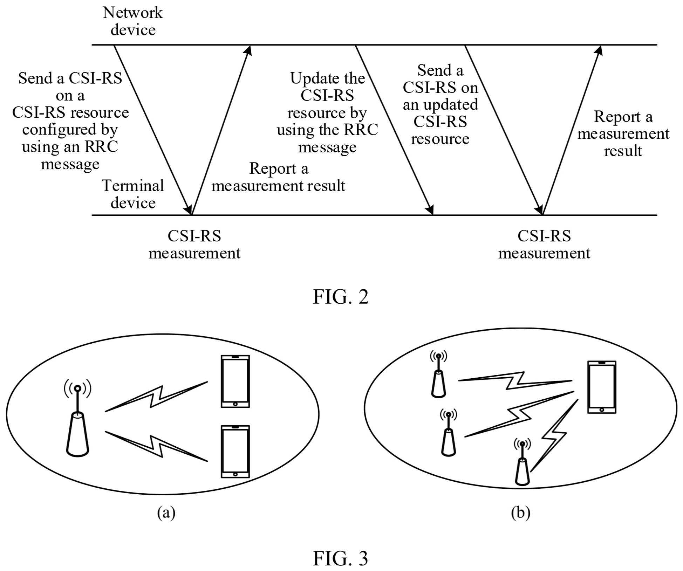

When a group of narrow beams to be measured by the terminal device changes, the network device may update, by using an RRC message, information about the CSI-RS resource to be measured by the terminal device, for example, a beam, frequency domain information, and time domain information corresponding to the CSI-RS resource. With reference to FIG. 2, the following describes in detail a procedure in which a network device updates a resource by using an RRC message.

FIG. 2 is a diagram of an existing resource update process according to an embodiment of this application.

As shown in FIG. 2, the network device sends a CSI-RS to a terminal device based on a CSI-RS resource configured by using the RRC message, and the terminal device measures the CSI-RS and reports a measurement result to the network device. When a group of narrow beams to be measured by the terminal device changes, the network device updates the CSI-RS resource by using the RRC message. Further, the network device sends a CSI-RS to the terminal device based on an updated CSI-RS resource, and the terminal device measures the CSI-RS and reports a measurement result to the network device.

In the foregoing method, because latency is high, the network device cannot indicate information about the updated CSI-RS resource to the terminal device. As a result, the terminal device cannot select an optimal reception beam in a timely manner, leading to a transmission performance loss.

To resolve the foregoing problem, this application provides a resource update method, where DCI or a MAC-CE is used for updating a reference signal resource in N reference signal resource groups in at least one reference signal resource group configured in an RRC message. In comparison with the RRC message, for the DCI and the MAC-CE, latency is lower. In this way, the network device can indicate an updated reference signal resource to the terminal device in a timely manner, to facilitate the terminal device in adjusting a reception beam in a timely manner, improving transmission performance.

Before the methods provided in embodiments of this application are described, the following descriptions are first provided.

First, to clearly describe the technical solutions in embodiments of this application, terms such as "first" and "second" are used in embodiments of this application to distinguish between same items or similar items that provide basically same functions and purposes. For example, a first beam indication manner and a second beam indication manner are merely used for distinguishing between different beam indication manners, and do not limit a sequence of the first beam indication manner and the second beam indication manner. A person skilled in the art may understand that the terms such as "first" and "second" do not limit a quantity or an execution sequence, and the terms such as "first" and "second" do not indicate a definite difference.

Second, in embodiments of this specification, terms and English abbreviations, for example, a channel state information reference signal (CSI-RS), a sounding reference signal (SRS), a synchronization signal block (SSB), and a transmission configuration indicator (TCI), are all examples given for ease of description, and shall not constitute any limitation on this application. This application does not exclude a possibility of defining another term that can implement same or similar functions in an existing or future protocol.

Third, a "protocol" in embodiments of this application may be a standard protocol in the communication field, for example, including an LTE protocol, an NR protocol, and a related protocol applied to a future communication system. This is not limited in this application.

Fourth, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

Fifth, correspondences enumerated in tables in this application may be configured, or may be predefined. Values of the information in the tables are merely examples, and other values may be configured. This is not limited in this application. When a correspondence between the information and the parameters is configured, not all the correspondences shown in the tables need to be configured. For example, in the tables in this application, correspondences shown in some rows may alternatively not be configured. For another example, proper deformations and adjustments, such as splitting and combination, may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. In implementations of the foregoing tables, another data structure, for example, an array, a queue, a container, a stack, a linear table, a pointer, a linked list, a tree, a graph, a structure, a class, a pile, or a hash table, may alternatively be used.

Sixth, in this application, an "indication" may include a direct indication and an indirect indication, or may include an explicit indication and an implicit indication. Information indicated by a piece of information (for example, a resource update message) is referred to as to-be-indicated information, for example, one or more pieces of content indicated by the resource update message in embodiments of this application. In a specific implementation process, the to-be-indicated information may be indicated in a plurality of manners. For example, but not limited to, the to-be-indicated information, such as the to-be-indicated information or an index of the to-be-indicated information, may be directly indicated. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be used for determining to-be-indicated information.

In addition, in this application, the beam information may indicate a beam, the slot information may indicate a slot, and the periodicity information may indicate a periodicity.

For ease of understanding the resource update method provided in embodiments of this application, the following describes a system architecture of the resource update method provided in embodiments of this application. It may be understood that the system architecture described in embodiments of this application is intended to describe the technical solutions in embodiments of this application more clearly, and does not constitute a limitation on the technical solutions provided in embodiments of this application.

FIG. 3 is a diagram of a system architecture of a communication system according to an embodiment of this application.

As shown in (a) in FIG. 3, the communication system includes one or more network devices (for example, one network device shown in the figure) and one or more terminal devices (for example, two terminal devices shown in the figure). It can be learned that one network device may transmit data or control signaling to the one or more terminal devices.

As shown in (b) in FIG. 3, the communication system includes one or more network devices (for example, three network devices shown in the figure) and one or more terminal devices (for example, one terminal device shown in the figure). It can be learned that a plurality of network devices may transmit data or control signaling to the one terminal device.

In the communication systems shown in (a) and (b) in FIG. 3, the terminal devices may be mobile or fixed. The network device may be a micro base station, or may be a TRP or another type of network device. This is not limited in this embodiment of this application. The network device may provide communication coverage for a specific geographical area, and may be in radio link communication with a terminal device located in the coverage area (a cell).

Optionally, the communication system shown in the communication system may include more network devices, and coverage of each network device may include another quantity of terminal devices. This is not limited in this embodiment of this application.

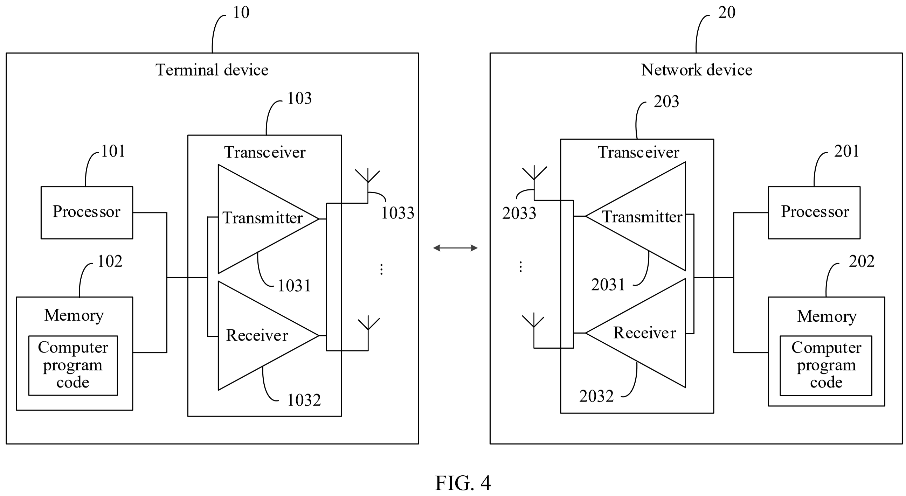

FIG. 4 is a diagram of communication performed by a communication apparatus according to an embodiment of this application.

As shown in FIG. 4, a terminal device 10 logically includes a plurality of parts, for example, includes a processor 101, a memory 102, and a transceiver 103. The transceiver 103 includes a transmitter 1031, a receiver 1032, and an antenna 1033. A network device 20 logically includes a plurality of parts, for example, includes a processor 201, a memory 202, and a transceiver 203. The transceiver 203 includes a transmitter 2031, a receiver 2032, and an antenna 2033. The receiver 1032 may be configured to receive, through the antenna 1033, information sent by the network device 20. The transmitter 1031 may be configured to send information to the network device 20 through the antenna 1033. The transmitter 2031 may be configured to send information to the terminal device 10 through the antenna 2033. The receiver 2032 may be configured to receive, through the antenna 2033, information sent by the terminal device 10.

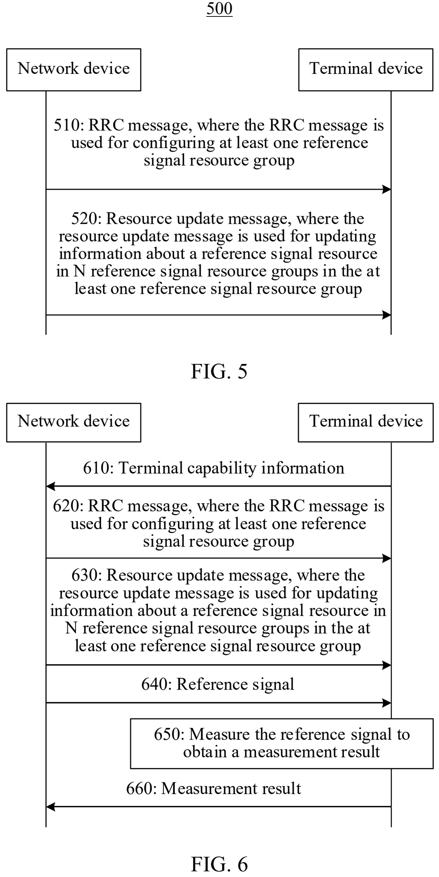

The following describes in detail the resource update method provided in this application with reference to FIG. 5.

FIG. 5 is a schematic flowchart of a resource update method 500 according to an embodiment of this application. The method 500 shown in FIG. 5 includes step 510 and step 520. The following describes each step in detail.

Step 510: A network device sends an RRC message to a terminal device, where the RRC message is used for configuring at least one reference signal resource group. Correspondingly, the terminal device receives the RRC message from the network device.

Each of the at least one reference signal resource group includes at least one reference signal resource. When one reference signal resource group includes one reference signal resource, the reference signal resource group is equivalent to the reference signal resource. When one reference signal resource group includes a plurality of reference signal resources, the reference signal resource group may be a reference signal resource set (resource set) in a protocol, or may be a set at a finer granularity than the reference signal resource set, for example, a subset of the reference signal resource set.

It should be understood that in this application, the reference signal resource may be a CSI-RS resource, or may be another resource, for example, a CS-RS resource, an SSB resource, a tracking reference signal (tracking reference signal, TRS) resource, an SRS resource, a phase tracking reference signal (phase tracking reference signal, PTRS) resource, a DMRS resource, or a physical random access channel (physical random access channel, PRACH) resource. In the following embodiments, an example in which the reference signal resource is a CSI-RS resource is used for description. However, this should not constitute any limitation on this embodiment of this application. The CSI-RS resource may alternatively be replaced with any one of the foregoing reference signal resources.

It should be further understood that, in this application, based on different time domain behaviors (or resource types), the reference signal resources may be classified into a periodic (periodic, P) resource, a semi-persistent (semi-persistent, SP) resource, and an aperiodic (aperiodic, AP) resource. Correspondingly, types of the reference signal resources include: periodic, semi-persistent, or aperiodic. The method provided in this application is applicable to a periodic resource, a semi-persistent resource, or an aperiodic resource, for example, a periodic CSI-RS resource or a semi-persistent SRS resource.

For example, the network device sends the RRC message to the terminal device, where the RRC message is used for configuring the at least one reference signal resource group, and each reference signal resource group includes one or more reference signal resources. Correspondingly, the terminal device receives the RRC message from the network device.

Step 520: The network device sends a resource update message to the terminal device, where the resource update message is used for updating information about a reference signal resource in N reference signal resource groups in the at least one reference signal resource group. Correspondingly, the terminal device receives the resource update message from the network device.

N is a positive integer. A value of N may be less than or equal to a quantity of the at least one reference signal resource group configured in the RRC message. The resource update message may be DCI or a MAC-CE.

For example, the network device sends the MAC-CE to the terminal device, where the MAC-CE carries information used for updating the reference signal resource in the N reference signal resource groups in the at least one reference signal resource group. Correspondingly, the terminal device receives the MAC-CE from the network device.

It may be understood that updating the information about the reference information resource in the N reference signal resource groups by using the resource update message may be understood as updating some parameters of the reference signal resource, but optionally not updating an index of the reference signal resource, or optionally also updating the index of the reference signal resource. This is not limited in this application.

The following uses the MAC-CE as an example to describe a design of the resource update message in detail. However, this should not constitute any limitation on this embodiment of this application. The following design may also be applicable to the DCI. To be specific, the following design may also be a signaling design of the DCI, provided that the MAC-CE in the following design is replaced with the DCI.

The resource update message may indicate at least one piece of the following information: information used for determining the value of N; indexes of the N reference signal resource groups; beam information of the reference signal resource in the N reference signal resource groups; whether the resource update message indicates beam information of the reference signal resource; slot information of the reference signal resource in the N reference signal resource groups; or periodicity information of the reference signal resource in the N reference signal resource groups.

It should be understood that, in the following descriptions, names of fields included in the MAC-CE are merely used for distinguishing, and a specific meaning of each field is not limited. In addition, field division is merely an example, and should not constitute any limitation on this embodiment of this application. For example, one or more pieces of the following information may alternatively be represented by using a specific field in the MAC-CE.

The following describes the foregoing information in detail.

1. Information used for determining the value of N

N is a quantity of updated reference signal resource groups in the resource update message.

For example, the information used for determining the value of N may be a specific value of N, or other information corresponding to the specific value.

For example, the information used for determining the value of N may be represented by using a field in the MAC-CE, for example, a resource group quantity field. The resource group quantity field indicates the quantity of updated reference signal resource groups in the resource update message. It may be understood that, when one reference signal resource group includes one reference signal resource, N may also be considered as a quantity of updated reference signal resources in the resource update message, and the information used for determining the value of N may also be represented by using a resource quantity field. In other words, the reference signal resource group may be replaced with the reference signal resource, and a quantity of reference signal resource groups may be replaced with a quantity of reference signal resources. The following uses a reference signal resource group as an example for detailed description.

When information about the value of N is represented by using the resource group quantity field, a length of the field may be 1 bit or a plurality of bits (for example, 2 bits). The following describes several possible designs of bytes and bits occupied by the field.

In a possible design, the field may occupy one or more bits in a 1st byte in the MAC-CE, for example, a 1st bit, a 2nd bit, a last bit, first two bits, or last two bits in the 1st byte in the MAC-CE. Alternatively, the field may occupy one or more bits in a 2nd byte in the MAC-CE, for example, a 1st bit, a 2nd bit, a last bit, first two bits, or last two bits in the 2nd byte in the MAC-CE. Alternatively, the field may occupy one or more bits in a 3rd byte in the MAC-CE, for example, a 1st bit, a 2nd bit, a last bit, first two bits, or last two bits in the 3rd byte in the MAC-CE. The details are not listed one by one herein. Bytes and specific bits occupied by the foregoing field are not specifically limited in this application.

In another possible design, the field may occupy a 1st bit, a 2nd bit, a last bit, first two bits, or last two bits in a byte used for carrying an index of a 1st reference signal resource group. The field indicates whether there is another reference signal resource group in addition to the 1st reference signal resource group.

In still another possible design, the field may occupy a 1st bit, a 2nd bit, a last bit, first two bits, or last two bits in each byte used for carrying an index of a reference signal resource group. The field indicates whether a byte following a byte in which the field is located is also a byte used for carrying the index of the reference signal resource group.

Optionally, when a first condition is satisfied, the resource group quantity field is present; or when the first condition is not satisfied, the field is not present. That the field is not present means that the terminal device may ignore the field, or the field is used for another purpose, or the field is reserved (that is, the field does not indicate any information). This is not limited in this application.

The first condition includes at least one or more of the following: The terminal device supports updating one reference signal resource group by using the resource update message; the terminal device supports updating simultaneously a plurality of reference signal resource groups by using the resource update message; the terminal device supports switching between updating one reference signal resource group and updating a plurality of reference signal resource groups (that is, the terminal device supports a variable quantity of reference signal resource groups, that is, the value of N is variable); the network device supports updating one reference signal resource group by using the resource update message (for example, the network device configures the function by using the RRC message); the network device supports updating simultaneously a plurality of reference signal resource groups by using the resource update message (for example, the network device configures the function by using the RRC message); or the network device supports switching between updating one reference signal resource group and updating a plurality of reference signal resource groups (that is, the network device supports a variable quantity of reference signal resource groups, that is, the value of N is variable) (for example, the network device configures the function by using the RRC message).

The information used for determining the value of N may alternatively be an index of a resource group, and the value of N may be determined based on a quantity of indexes of resource groups. In addition, when one reference signal resource group includes one reference signal resource, a design of the resource group quantity field is also applicable to a design of the resource quantity field. In other words, the reference signal resource group is equivalent to the reference signal resource.

It should be further understood that a value of a field that indicates the value of N may affect another field. For example, the resource update message is the MAC-CE. For a format of the MAC-CE, refer to Table 2.

As shown in Table 2, each row represents a group of bytes, the MAC-CE includes N groups of bytes, each group of bytes includes one or more bytes, and each group of bytes corresponds to one reference signal resource group. For example, a 1st reference signal resource group corresponds to one group of bytes, and a 2nd reference signal resource group corresponds to another group of bytes. That each group of bytes corresponds to one reference signal resource group may be understood as that the group of bytes is used for recording information about the reference signal resource group, for example, an index of the reference signal resource group, beam information of the reference signal resource group, and slot information of the reference signal resource group. The terminal device may determine, based on the value of N, a quantity of groups of bytes included in the resource update message, or determine which groups of bytes in a resource update message format are actually present and which are not present.

For example, when the field indicates that the MAC-CE includes information about the N reference signal resource groups, first N groups of bytes are present, and other bytes are not present. Particularly, the MAC-CE may include information corresponding to one or two reference signal resource groups. The field indicates whether the resource update message specifically includes one or two reference signal resource groups. If one reference signal resource group is included, there is only one group of bytes in the resource update message, for example, only a 1st group of bytes is present, and a 2nd group of bytes is not present. If two reference signal resource groups are included, there are two groups of bytes in the resource update message, that is, both a 1st group of bytes and a 2nd group of bytes are present.

Table 2

| ... |
| --- |
| 1st reference signal resource group |
| 2nd reference signal resource group |
| ... |

Optionally, a quantity of reference signal resource groups may be replaced with a quantity of reference signal resources. In other words, the resource update message includes a field that indicates a quantity of reference signal resources updated by using the resource update message. The resource update message may include one field that indicates a quantity of reference signal resources updated by using the resource update message. The resource update message may include a plurality of fields. Each field corresponds to one reference signal resource group, and indicates a quantity of reference signal resources in the reference signal resource group to be updated by using the resource update message.

Optionally, indication information of the quantity of reference signal resource groups and indication information of the quantity of reference signal resources are present, that is, the resource update message includes the foregoing two types of indication information.

2. Indexes of the N reference signal resource groups

The indexes of the N reference signal resource groups may indicate the N reference signal resource groups updated by using the resource update message. The indexes of the N reference signal resource groups may be indicated by a reference signal resource group index field. The field indicates an index of a reference signal resource group, and indicates information about one or more specific reference signal resource groups to be updated by using the resource update message. The resource update message may include one or more reference signal resource group index fields. The index of the reference signal resource group may be an index of a resource configuration (resource setting), an index of a resource set (resource set), an index of a subset of a resource set, or an index of a resource configuration + a local index of a resource set in the resource configuration (for example, if the resource configuration includes two resource sets, local indexes of the resource sets are 0 and 1 respectively), or an index of a resource set + a local index of a subset of the resource set (for example, if the resource set includes two subsets, local indexes of the resource sets are 0 and 1 respectively).

The index of the reference resource group may alternatively be replaced with an index of a reference signal resource. For example, one reference signal resource group may include only one reference signal resource. In this case, it is not necessary to indicate the index of the reference signal resource group; instead, the index of the reference signal resource is directly indicated. The reference signal resource index field indicates an index of a reference signal resource, and indicates information about one or more specific reference signal resources to be updated by using the resource update message. The resource update message may include one or more reference signal resource index fields. The index of the reference signal resource may be a global index of the reference signal resource, that is, an index of the reference signal resource in all configured reference signal resources; or the index of the reference signal resource may be a local index of the reference signal resource, that is, an index of the reference signal resource in a reference signal resource group to which the reference signal resource belongs. Alternatively, both the index of the reference signal resource group and the index of the reference signal resource are indicated for jointly determining a reference signal resource in a reference signal resource group updated by using the resource update message.

Optionally, the index of the reference signal resource group may be replaced with the index of the reference signal resource. In other words, the resource update message includes a field that indicates an index of a reference signal resource updated by using the resource update message. The resource update message may include one group of fields that indicate indexes of reference signal resources updated by using the resource update message. The resource update message may include a plurality of groups of fields. Each field corresponds to one reference signal resource group, and indicates specific reference signal resources in the reference signal resource group to be updated by using the resource update message.

Optionally, indication information of the index of the reference signal resource group and indication information of the index of the reference signal resource are present, that is, the resource update message includes the foregoing two types of indication information.

3. Beam information of the reference signal resource in the N reference signal resource groups

The beam information of the reference signal resource in the N reference signal resource groups may indicate a beam of the reference signal resource in the N reference signal resource groups, that is, a beam used when a reference signal is transmitted based on the reference signal resource in the N reference signal resource groups. In this application, the beam of the reference signal resource may be a spatial domain filter, a spatial filter, a spatial domain parameter, a spatial parameter, a spatial domain setting, a spatial setting, QCL information, a QCL assumption, a QCL indication, a TCI state (including an uplink TCI state or a downlink TCI state), a spatial relation, or the like. The beam information of the reference signal resource in the N reference signal resource groups may be specifically an index of the information, for example, an index of the TCI state or an index of the QCL indication.

Optionally, the beam information of the reference signal resource in the N reference signal resource groups is indicated in any one of the following manners: a first beam indication manner or a second beam indication manner. When the first beam indication manner is used for the resource update message, the resource update message indicates one piece of corresponding beam information for each of the N reference signal resource groups. When the second beam indication manner is used for the resource update message, the resource update message indicates one piece of corresponding beam information for each reference signal resource included in the N reference signal resource groups.

In other words, in the first beam indication manner, each of the N reference signal resource groups corresponds to one piece of beam information; and in the second beam indication manner, each reference signal resource included in the N reference signal resource groups corresponds to one piece of beam information.

That one piece of corresponding beam information is indicated for each of the N reference signal resource groups may be understood as that, when a reference signal is transmitted based on all reference signal resources in a specific reference signal resource group, an indicated beam corresponding to the reference signal resource group may be used for transmitting the reference signal. That one piece of corresponding beam information is indicated for each reference signal resource included in the N reference signal resource groups may be understood as that, when a reference signal is transmitted based on each reference signal resource in the N reference signal resource groups, a beam corresponding to the reference signal resource may be used for transmitting the reference signal. In other words, the reference signal resource is combined with the beam, and a resource used for transmitting the reference signal is defined from a plurality of dimensions (for example, time domain, frequency domain, and spatial domain).

It may be understood that the foregoing beam indication manners are merely examples, and should not constitute any limitation on this embodiment of this application. For example, a third beam indication manner may be further included. When the third beam indication manner is used for the resource update message, the resource update message indicates one piece of beam information for the N reference signal resource groups. In other words, all reference signal resources in the N reference signal resource groups share a beam. For another example, a fourth beam indication manner may be further included. When the fourth beam indication manner is used for the resource update message, the resource update message indicates a plurality of pieces of beam information for each of the N reference signal resource groups, and each piece of beam information corresponds to a part of reference signal resources in the reference signal resource group. In other words, when a reference signal is transmitted based on a part of reference signal resources in a specific reference signal resource group, an indicated beam corresponding to the part of reference signal resources may be used for transmitting the reference signal.

It may be understood that a specific beam indication manner to be used may affect a quantity of bytes that are in the resource update message and that indicate beam information of a reference signal resource. For example, the resource update message is the MAC-CE. For a format of the MAC-CE, refer to Table 3. With reference to Table 3, the following describes in detail impact of a beam indication manner on a quantity of bytes that indicate beam information of a reference signal resource.

As shown in Table 3, each row represents one byte, and each reference signal resource group corresponds to a plurality of bytes. Each byte corresponds to one reference signal resource in the reference signal resource group, and indicates beam information of the reference signal resource. As shown in Table 3, 1st beam information is beam information corresponding to a 1st reference signal resource and occupies one byte, 2nd beam information is beam information corresponding to a 2nd reference signal resource and occupies another byte, 3rd beam information is beam information corresponding to a 3rd reference signal resource and occupies another byte, and so on. When the first beam indication manner is used, a 1st byte in the plurality of bytes is present, and other bytes are not present. When the second beam indication manner is used, each of the plurality of bytes is present. Alternatively, the MAC-CE includes a plurality of bytes corresponding to a plurality of reference signal resources indicated by using the MAC-CE, and each byte corresponds to one reference signal resource. When the third beam indication manner is used, a 1st byte in the plurality of bytes is present, and other bytes are not present. When the second beam indication manner is used, each of the plurality of bytes is present.

Table 3

| ... |
| --- |
| 1st beam information |
| 2nd beam information |
| 3rd beam information |

(continued)

| ... |
| --- |

Optionally, the resource update message further indicates a beam indication manner, and the beam indication manner includes the first beam indication manner or the second beam indication manner.

The foregoing describes a plurality of beam indication manners. A specific beam indication manner to be used may be indicated based on beam indication manner information. In other words, the beam indication manner information indicates a beam indication manner used in the resource update message. For example, the beam indication manner information may indicate one of the first beam indication manner and the second beam indication manner, or may indicate one of the third beam indication manner and the second beam indication manner. This is not limited in this application. The beam indication manner information may be, for example, an index of a beam indication manner. Different beam indication manners correspond to different indexes, and a used beam indication manner is indicated by using the index.

The beam indication manner information may be indicated by using a beam indication manner field. For example, the resource update message may include one beam indication manner field that indicates a specific beam indication manner used for a reference signal resource in the resource update message. For another example, the resource update message may include a plurality of beam indication manner fields. Each field corresponds to one reference signal resource group, and indicates a specific beam indication manner used for the reference signal resource group.

Optionally, a length of the field may be 1 bit or a plurality of bits (for example, 2 bits). The following describes several possible designs of bytes and bits occupied by the field.

In a possible design, the field may occupy one or more bits in a 1st byte in the MAC-CE, for example, a 1st bit, a 2nd bit, a last bit, first two bits, or last two bits in the 1st byte in the MAC-CE. Alternatively, the field may occupy one or more bits in a 2nd byte in the MAC-CE, for example, a 1st bit, a 2nd bit, a last bit, first two bits, or last two bits in the 2nd byte in the MAC-CE. Alternatively, the field may occupy one or more bits in a 3rd byte in the MAC-CE, for example, a 1st bit, a 2nd bit, a last bit, first two bits, or last two bits in the 3rd byte in the MAC-CE.

In another possible design, the field may occupy a 1st bit, a 2nd bit, a last bit, first two bits, or last two bits in a byte used for carrying an index of a reference signal resource group.

In still another possible design, the field may alternatively occupy a 1st byte in a plurality of bytes that indicate beam information and that correspond to one reference signal resource group. For example, the field occupies a 1st bit, a 2nd bit, or a last bit in a 1st byte in a

plurality of bytes that indicate beam information and that correspond to one reference signal resource group. The field indicates, in addition to the 1st byte, whether there is another byte that is in the resource update message and that indicates beam information of a reference signal resource in the reference signal resource group. For example, the resource update message is the MAC-CE. For a format of the MAC-CE, refer to Table 4. With reference to Table 4, the following describes in detail how the field indicates, in addition to the 1st byte, whether there is another byte that indicates beam information of a reference signal resource in the reference signal resource group.

As shown in Table 4, each row represents one byte, and each column represents one bit. For example, a byte indicating 1st beam information is one byte (denoted as a 1st byte), and the byte includes a plurality of bits; a byte indicating 2nd beam information is another byte, and the byte includes a plurality of bits; a byte indicating the 1st beam information is another byte; and so on. The beam indication manner field (that is, a field E in the table) occupies a 1st bit in the 1st byte, and may indicate, in addition to the 1st byte, whether there is a following byte that indicates beam information of a reference signal resource in the reference signal resource group. Alternatively, there is one field for each of a plurality of bytes that indicate beam information and that correspond to one reference signal resource group, and the field indicates whether a following byte still indicates beam information of a reference signal resource.

Table 4

| ... | |
|---|---|
| E | 1st beam information |
| | 2nd beam information |
| | 3rd beam information |
| ... | |

4. Whether the resource update message indicates the beam information of the reference signal resource

Whether the resource update message indicates the beam information of the reference signal resource is also referred to as whether the resource update message includes the beam information of the reference signal resource.

Whether the resource update message indicates the beam information of the reference signal resource may be indicated by using a beam presence indication field. The resource update message may include one field that indicates whether the resource update message indicates the beam information. The resource update message may include a plurality of fields. Each field corresponds to one reference signal resource group, and indicates whether there is beam information corresponding to a reference signal resource in the reference signal resource group. Alternatively, the resource update message may include a plurality of fields. Each field corresponds to one reference signal resource, and indicates whether there is beam information corresponding to the reference signal resource.

A length of the field may be 1 bit or a plurality of bits (for example, 2 bits). The following describes several possible designs of bytes and bits occupied by the field.

In a possible design, the field may occupy one or more bits in a 1st byte in the MAC-CE, for example, a 1st bit, a 2nd bit, a last bit, first two bits, or last two bits in the 1st byte in the MAC-CE. Alternatively, the field may occupy one or more bits in a 2nd byte in the MAC-CE, for example, a 1st bit, a 2nd bit, a last bit, first two bits, or last two bits in the 2nd byte in the MAC-CE. Alternatively, the field may occupy one or more bits in a 3rd byte in the MAC-CE, for example, a 1st bit, a 2nd bit, a last bit, first two bits, or last two bits in the 3rd byte in the MAC-CE.

In another possible design, the field may occupy a 1st bit, a 2nd bit, a last bit, first two bits, or last two bits in a byte used for carrying an index of a reference signal resource group.

The field may be further combined with a function of the beam indication manner field. To be specific, one field indicates a quantity X of beams corresponding to the resource update message or a quantity X of beams corresponding to each reference signal resource group in the resource update message. X may be equal to 0, indicating that there is no beam information. Alternatively, X may be equal to 1, indicating that there is only one piece of beam information. When X is equal to 1, the first beam indication manner or the third beam indication manner may be used. Alternatively, X may be a number greater than 1, indicating that there are a plurality of pieces of beam information. For example, each reference signal resource corresponds to one piece of beam information. In this case, the second beam indication manner may be used.

Optionally, when a second condition is satisfied, the beam presence indication field is present; or when the second condition is not satisfied, the beam presence indication field is not present. That the field is not present means that the terminal device may ignore the field, or the field is used for another purpose, or the field is reserved (that is, the field does not indicate any information).

The second condition includes at least one or more of the following: The terminal device supports updating information about one reference signal resource group by using the resource update message; the terminal device supports updating simultaneously information about a plurality of reference signal resource groups by using the resource update message; the terminal device supports switching between updating one reference signal resource group and updating a plurality of reference signal resource groups (that is, the terminal device supports a variable quantity of reference signal resource groups, that is, the value of N is variable); the network device supports updating information about one reference signal resource group by using the resource update message (for example, the network device configures the function by using the RRC message); the network device supports updating simultaneously information about a plurality of reference signal resource groups by using the resource update message (for example, the network device configures the function by using the RRC message); the network device supports switching between updating one reference signal resource group and updating a plurality of reference signal resource groups (that is, the network device supports a variable quantity of reference signal resource groups, that is, the value of N is variable); the terminal device supports using a common beam for a CSI-RS resource; the network device supports using a common beam for a CSI-RS resource (for example, the network device configures the function by using the RRC message); the terminal device supports updating information about a reference signal resource in a reference signal resource group by using the resource update message; or the network device supports updating information about a reference signal resource in a reference signal resource group by using the resource update message (for example, the network device configures the function by using the RRC message).

In this application, the common beam is a beam used for a plurality of uplink and downlink channels or reference signals. If the common beam is used for the CSI-RS resource, a beam of the CSI-RS resource does not need to be specially indicated by using the foregoing resource update message. If the common beam is used for the CSI-RS resource, when the network device sends, to the terminal device, a piece of common beam indication signaling indicating a new common beam, the common beam takes effect at a first moment. The first moment may be a moment obtained by adding a time offset to a response message sending moment corresponding to the common beam indication signaling. In addition, other information of the CSI-RS, such as slot information, needs to be indicated by using the resource update message. Resource information indicated by using the resource update message takes effect at a second moment. The second moment may be a moment obtained by adding a time offset to a response message sending moment corresponding to the resource update message. It may be specified that the first moment and the second moment are the same. To be specific, the network device needs to coordinate sending time of the common beam indication signaling and sending time of the resource update message, so that the first moment is consistent with the second moment. Alternatively, it may be specified that the indicated common beam and the indicated resource information both take effect at a later moment in the first moment and the second moment. For example, the second moment is later than the first moment. In this case, the common beam indicated by the common beam indication signaling does not take effect at the first moment, but takes effect at the second moment.

5. Slot information of the reference signal resource in the N reference signal resource groups

The slot information of the reference signal resource in the N reference signal resource groups indicates a slot of the reference signal resource. The slot information may be indicated by using a slot information indication field. The resource update message may include one field, used for determining slot information of all reference signal resources. Alternatively, the resource update message may include a plurality of fields. Each field corresponds to one reference signal resource group, and is used for determining slot information of a reference signal resource in the reference signal resource group. Alternatively, the resource update message may include a plurality of fields. Each field corresponds to one reference signal resource, and is used for determining slot information corresponding to the reference signal resource.

A length of the field may be 8 bits. The 8 bits occupy an entire byte. A value of the field may be an integer ranging from 0 to 255, an integer ranging from -127 to 128, or an integer ranging from -128 to 127.

Alternatively, the length of the field may be 10 bits. The 10 bits occupy an entire byte and other 2 bits. The other 2 bits may be 2 bits in a byte in which an index of a reference signal resource group is located (for example, a byte in which an index of a 1st reference signal resource group is located, or a byte in which an index of a reference signal resource group corresponding to the field is located) (for example, the index of the reference signal resource group occupies 6 bits, and the other 2 bits are used for slot information of a reference signal resource), so that bit overheads are reduced.

For example, slot information corresponding to one reference signal resource group occupies 10 bits, and the 10 bits include 8 bits in one byte and 2 bits in a byte in which an index of the reference signal resource group is located. The value of the field may be an integer ranging from 0 to 1023, an integer ranging from -511 to 512, or an integer ranging from -512 to 511. Alternatively, the value of the field may be an integer ranging from 0 to 639, an integer ranging from -319 to 320, or an integer ranging from -320 to 319.

Optionally, the slot information of the reference signal resource in the N reference signal resource groups is indicated in any one of the following manners: a first slot indication manner or a second slot indication manner. When the first beam slot manner is used in the resource update message, the resource update message indicates one piece of corresponding slot information for each of the N reference signal resource groups. When the second slot indication manner is used for the resource update message, the resource update message indicates one piece of corresponding slot information for each reference signal resource included in the N reference signal resource groups.

In other words, in the first slot indication manner, each of the N reference signal resource groups corresponds to one piece of slot information; and in the second slot indication manner, each reference signal resource included in the N reference signal resource groups corresponds to one piece of slot information.

That one piece of corresponding slot information is indicated for each of the N reference signal resource groups may be understood as that, when a reference signal is transmitted based on all reference signal resources in a specific reference signal resource group, indicated slot information corresponding to the reference signal resource group may be used. That one piece of corresponding slot information is indicated for each reference signal resource included in the N reference signal resource groups may be understood as that, when a reference signal is transmitted based on each reference signal resource in the N reference signal resource groups, slot information corresponding to the reference signal resource may be used. In other words, a resource used for transmitting a reference signal is defined from a perspective of time domain.

It may be understood that the foregoing slot indication manners are merely examples, and should not constitute any limitation on this embodiment of this application. For example, a third slot indication manner may be further included. When the third slot indication manner is used for the resource update message, one piece of slot information is indicated for the N reference signal resource groups. In other words, all reference signal resources in the N reference signal resource groups share one piece of slot information. For another example, a fourth slot indication manner may be further included. When the fourth slot indication manner is used for the resource update message, a plurality of pieces of slot information are indicated for each of the N reference signal resource groups, and each piece of slot information is used for a part of reference signal resources in the reference signal resource group.

Optionally, a specific slot indication manner to be used may affect a quantity of bytes that are in the resource update message and that indicate slot information. For example, the resource update message is the MAC-CE. For a format of the MAC-CE, refer to Table 5. With reference to Table 5, the following describes in detail impact of a slot indication manner on a quantity of bytes that are in the resource update message and that indicate slot information.

As shown in Table 5, each row represents one byte, and each reference signal resource group corresponds to a plurality of bytes. Each byte corresponds to one reference signal resource in the reference signal resource group, and indicates slot information corresponding to the reference signal resource. For example, a 1st reference signal resource corresponds to a 1st byte, and the byte indicates slot information (namely, 1st slot information) corresponding to the reference signal resource; a 2nd reference signal resource corresponds to a 2nd byte, and the 2nd byte indicates slot information

(namely, 2nd slot information) corresponding to the reference signal resource; a 3rd reference signal resource corresponds to a 3rd byte, and the 3rd byte indicates slot information (namely, 3rd slot information) corresponding to the reference signal resource; and so on. When the first slot indication manner is used, a 1st byte in the plurality of bytes is present, and other bytes are not present. When the second slot indication manner is used, each of the plurality of bytes is present. Alternatively, the MAC-CE includes a plurality of bytes corresponding to a plurality of reference signal resources updated by using the MAC-CE, and each byte corresponds to one reference signal resource. When the third slot indication manner is used, a 1st byte in the plurality of bytes is present, and other bytes are not present. When the second slot indication manner is used, each of the plurality of bytes is present.

Table 5

| ... |
| --- |
| 1st slot information |
| 2nd slot information |
| 3rd slot information |
| ... |

Optionally, the terminal device determines, based on the slot information, a slot corresponding to each reference signal resource.

In a possible design, the slot information may be a relative slot offset. When the first slot indication manner is used for the resource update message, a relative slot offset corresponding to each reference signal resource group is used for updating slot positions of all reference signal resources in the reference signal resource group. Alternatively, when the second slot indication manner is used for the resource update message, a relative slot offset corresponding to each reference signal resource is used for updating a slot position of the reference signal resource.

The relative slot offset indicates a forward or backward offset applied based on a current slot position. Based on the relative slot offset, the terminal device applies a forward or backward offset to a slot of each reference signal resource based on a current slot position, to obtain a slot corresponding to each reference signal resource.

For example, if the slot information is indicated in the first slot indication manner, that is, one reference signal resource group corresponds to one relative slot offset, the terminal device applies the relative slot offset corresponding to the reference signal resource group to current slot positions of all reference signal resources in the reference signal resource group, to determine a slot of each reference signal resource in the reference signal resource group.

For another example, if the slot information is indicated in the second slot indication manner, that is, one relative slot offset is indicated for each reference signal resource, the terminal device determines a slot of each reference signal resource based on the relative slot offset corresponding to each reference signal resource.

For still another example, if the slot information is indicated in the third slot indication manner, that is, one relative slot offset is indicated for all reference signal resources, the terminal device determines a slot of each reference signal resource based on the relative slot offset.

In another possible design, the indicated slot information is absolute slot information. The absolute slot information indicates a specific slot. The terminal device may determine, based on the specific slot, a slot corresponding to each reference signal resource.

For example, if the slot information is indicated in the first slot indication manner, that is, one slot is indicated for one resource group, the indicated slot is used as a slot of one reference signal resource (for example, a 1st reference signal resource) in the reference signal resource group. A slot of another reference signal resource may be determined based on a slot relationship between the another reference signal resource and the one reference signal resource. For example, if the slot corresponding to the another reference signal resource is a following slot of the slot corresponding to the one reference signal resource, the terminal device may determine the slot of the another reference signal resource as a following slot of the indicated slot. A slot relationship between reference signal resources may be an initially configured slot relationship.

For another example, if the slot information is indicated in the second slot indication manner, that is, one slot is indicated for each reference signal resource, the indicated slot is directly used for each reference signal resource.

For another example, if the slot information is indicated in the third slot indication manner, that is, one slot is indicated for all reference signal resources, the indicated slot is used as a slot of one reference signal resource (for example, a 1st reference signal resource) of all the reference signal resources. A slot of another reference signal resource may be determined based on a slot relationship between the another reference signal resource and the one reference signal resource. For example, if the slot corresponding to the another reference signal resource is a following slot of the slot corresponding to the one reference signal resource, the terminal device may determine the slot of the another reference signal resource as a following slot of the indicated slot. A slot relationship between reference signal resources may be an initially configured slot relationship.

The foregoing describes a plurality of slot indication manners. A specific slot indication manner to be used may be indicated based on slot indication manner information. In other words, the slot indication manner information indicates a slot indication manner used in the resource update message. For example, the slot indication manner information may indicate one of the first slot indication manner and the second slot indication manner, or may indicate one of the third slot indication manner and the second slot indication manner. This is not limited in this application. The slot indication manner information may be, for example, an index of a slot indication manner. Different slot indication manners correspond to different indexes, and a used slot indication manner is indicated by using the index.

The slot indication manner information may be indicated by using a slot indication manner field. For example, the resource update message may include one slot indication manner field that indicates a specific slot indication manner used for a reference signal resource in the resource update message. For another example, the resource update message may include a plurality of slot indication manner fields. Each field corresponds to one reference signal resource group, and indicates a specific slot indication manner used for the reference signal resource group.

A length of the field may be 1 bit or a plurality of bits (for example, 2 bits). The following describes several possible designs of bytes and bits occupied by the field.

In a possible design, the field may occupy one or more bits in a 1st byte in the MAC-CE, for example, a 1st bit, a 2nd bit, a last bit, first two bits, or last two bits in the 1st byte in the MAC-CE. Alternatively, the field may occupy one or more bits in a 2nd byte in the MAC-CE, for example, a 1st bit, a 2nd bit, a last bit, first two bits, or last two bits in the 2nd byte in the MAC-CE. Alternatively, the field may occupy one or more bits in a 3rd byte in the MAC-CE, for example, a 1st bit, a 2nd bit, a last bit, first two bits, or last two bits in the 3rd byte in the MAC-CE.

In another possible design, the field may occupy a 1st bit, a 2nd bit, a last bit, first two bits, or last two bits in a byte used for carrying an index of a reference signal resource group.

In another possible design, the field may alternatively occupy a 1st bit in a plurality of bytes that indicate slot information and that correspond to one reference signal resource group. For example, the field may occupy a 1st bit, a 2nd bit, or a last bit in a 1st byte in a plurality of bytes that indicate slot information and that correspond to one reference signal resource group. Alternatively, the field may indicate, in addition to the 1st byte, whether there is another byte that is in the resource update message and that indicates a slot of a reference signal resource in the reference signal resource group. For example, the resource update message is the MAC-CE. For a format of the MAC-CE, refer to Table 6. With reference to Table 6, the following describes in detail how the slot indication manner field indicates, in addition to the 1st byte, whether there is another byte that indicates a slot of a reference signal resource in the reference signal resource group.

As shown in Table 6, each row represents one byte, and each column represents one bit. For example, a

byte indicating 1st slot information is one byte (denoted as a 1st byte), and the 1st byte includes a plurality of bits; a byte indicating 2nd slot information is another byte (denoted as a 2nd byte), and the 2nd byte includes a plurality of bits; a byte indicating 3rd slot information is another byte (denoted as a 3rd byte), and the 3rd byte includes a plurality of bits; and so on. The slot indication manner field (that is, a field E in the table) occupies a 1st bit in the 1st byte, and may indicate, in addition to the 1st byte, whether there is a following byte that indicates slot information of a reference signal resource in the reference signal resource group. Alternatively, there is one field for each of a plurality of bytes that indicate slot information and that correspond to one reference signal resource group, and the field indicates whether a following byte still indicates slot information of a reference signal resource.

Table 6

| ... | |
|---|---|
| E | 1st slot information |
| | 2nd slot information |
| | 3rd slot information |
| ... | |

Optionally, the field may be combined with the beam indication manner field, used as one field to indicate a beam and a slot, including the following manners.

Manner 1: According to the manner 1, for each of the N reference signal resource groups, the resource update message indicates one piece of corresponding beam information and/or one piece of slot information, and the beam information and/or the slot information are/is used for all reference signal resources in the reference signal resource group.

Manner 2: According to the manner 2, for each reference signal resource included in the N reference signal resource groups, the resource update message indicates one piece of corresponding beam information and/or one piece of slot information, and the beam information and/or the slot information are/is used for the reference signal resource.

Manner 3: According to the manner 3, for the N reference signal resource groups, the resource update message indicates one piece of beam information and/or one piece of slot information, and the beam information and/or the slot information are/is used for all reference signal resources in the N reference signal resource groups.

Manner 4: According to the manner 4, for each of the N reference signal resource groups, the resource update message indicates a plurality of pieces of beam information and/or a plurality of pieces of slot information, and each piece of beam information and/or each piece of slot information are/is used for a part of reference signal resources in the reference signal resource group.

A specific manner to be used may be indicated by using an RRC message, a MAC-CE, or DCI, or may be indicated by using another field in the resource update message. This is not limited in this application.

It may be understood that a specific manner to be used may affect a quantity of bytes that are in the resource update message and that indicate a beam and/or a slot. For example, each reference signal resource group corresponds to a plurality of groups of bytes. Each group of bytes corresponds to one reference signal resource in the reference signal resource group, and indicates beam information and/or slot information corresponding to the reference signal resource. When the manner 1 is used, a 1st group of bytes in the plurality of groups of bytes is present, and other groups of bytes are not present. When the manner 2 is used, each group of bytes in the plurality of groups of bytes is present. Alternatively, the MAC-CE includes a plurality of groups of bytes. Each group of bytes corresponds to one reference signal resource, and indicates beam information and/or slot information corresponding to the reference signal resource. When the manner 3 is used, a 1st group of bytes in the plurality of groups of bytes is present, and other bytes are not present. When the manner 2 is used, each byte in the plurality of groups of bytes is present.

6. Periodicity information of the reference signal resource in the N reference signal resource groups

The periodicity information may indicate a periodicity of the reference information resource in the N reference signal resource groups. The periodicity information may be, for example, a time period. The periodicity information of the reference signal resource in the N reference signal resource groups may be indicated by using a periodicity information field.

Optionally, the periodicity information of the reference signal resource in the N reference signal resource groups may be indicated in any one of the following manners: a first periodicity indication manner or a second periodicity indication manner. When the first periodicity indication manner is used for the resource update message, the resource update message indicates one piece of corresponding periodicity information for each of the N reference signal resource groups. When the second periodicity indication manner is used for the resource update message, the resource update message indicates one piece of corresponding periodicity information for each reference signal resource included in the N reference signal resource groups.

In other words, in the first periodicity indication manner, each of the N reference signal resource groups corresponds to one piece of periodicity information; and in the second periodicity indication manner, each reference signal resource included in the N reference signal resource groups corresponds to one piece of periodicity information.

That one piece of corresponding periodicity information is indicated for each of the N reference signal resource groups may be understood as that, when a reference signal is transmitted based on all reference signal resources in a specific reference signal resource group, an indicated periodicity corresponding to the reference signal resource group may be used for transmitting the reference signal. That one piece of corresponding periodicity information is indicated for each reference signal resource included in the N reference signal resource groups may be understood as that, when a reference signal is transmitted based on each reference signal resource in the N reference signal resource groups, an indicated periodicity may be used for transmitting the reference signal. In other words, the reference signal resource is combined with the periodicity, and a resource used for transmitting the reference signal is defined from a plurality of dimensions (for example, time domain, frequency domain, and spatial domain).

It may be understood that the foregoing periodicity indication manners are merely examples, and should not constitute any limitation on this embodiment of this application. For example, a third periodicity indication manner may be further included. When the third periodicity indication manner is used for the resource update message, the resource update message indicates one piece of periodicity information for the N reference signal resource groups. In other words, all reference signal resources in the N reference signal resource groups share a periodicity. For another example, a fourth periodicity indication manner may be further included. When the fourth periodicity indication manner is used for the resource update message, the resource update message indicates a plurality of pieces of periodicity information for each of the N reference signal resource groups, and each piece of periodicity information corresponds to a part of reference signal resources in the reference signal resource group. In other words, when a reference signal is transmitted based on a part of reference signal resources in a specific reference signal resource group, an indicated periodicity corresponding to the part of reference signal resources may be used for transmitting the reference signal.

It may be understood that the foregoing periodicity indication manners are merely examples, and should not constitute any limitation on this embodiment of this application. In addition, the network device may further indicate, to the terminal device, which periodicity indication manner to use, for example, the first periodicity indication manner or the second periodicity indication manner.

Optionally, the resource update message further indicates a power offset.

The power offset may be indicated by using a power offset field. The resource update message may include one field, used for determining power offsets of all reference signal resources. Alternatively, the resource update message may include a plurality of fields. Each field corresponds to one reference signal resource group, and is used for determining a power offset of a reference signal resource in the reference signal resource group. Alternatively, the resource update message may include a plurality of fields. Each field corresponds to one reference signal resource, and is used for determining a power offset corresponding to the reference signal resource.

Optionally, the resource update message further indicates a time domain symbol.

The time domain symbol may be indicated by using a time domain symbol field. The resource update message may include one field, used for determining time domain symbols of all reference signal resources. Alternatively, the resource update message may include a plurality of fields. Each field corresponds to one reference signal resource group, and is used for determining a time domain symbol of a reference signal resource in the reference signal resource group. Alternatively, the resource update message may include a plurality of fields. Each field corresponds to one reference signal resource, and is used for determining a time domain symbol corresponding to the reference signal resource.

Optionally, the resource update message further indicates a frequency domain position.

The frequency domain position may be indicated by using a frequency domain position information field. The resource update message may include one field, used for determining frequency domain positions of all reference signal resources. Alternatively, the resource update message may include a plurality of fields. Each field corresponds to one reference signal resource group, and is used for determining a frequency domain position of a reference signal resource in the reference signal resource group. Alternatively, the resource update message may include a plurality of fields. Each field corresponds to one reference signal resource, and is used for determining a frequency domain position corresponding to the reference signal resource.

Optionally, the resource update message further indicates a cell in which the reference signal resource is updated. For example, the resource update message may include a cell index, and the cell index indicates the cell in which the reference signal resource is updated.

The cell index may be indicated by using a cell index field. The field indicates a specific cell in which a reference signal resource is to be updated by using the resource update message. The cell index indicated by the field may be an index of a serving cell, or may be an index of a non-serving cell. The serving cell (serving cell) is a cell configured for the terminal device for data transmission. The non-serving cell (candidate cell) is a cell other than the serving cell.

Alternatively, the field may indicate a cell group, indicating a specific cell group in which a reference signal resource is to be updated by using the resource update message. Specifically, the field may indicate an index of a cell group. Alternatively, the field may indicate an index of a cell. If the cell belongs to a cell group, the resource update message is used for all cells in the cell group.

Optionally, the resource update message further indicates a bandwidth part (bandwidth part, BWP). For example, the resource update message may include a BWP index, and the BWP index indicates a BWP of an updated reference signal resource.

The BWP index may be indicated by using a BWP index field. Each cell may include one or more BWPs, and a BWP index indicates a specific BWP. The field may indicate a specific BWP of a reference signal resource to be updated by using the resource update message.

Optionally, the RRC message is further used for configuring one or more of the following: whether the information about the reference signal resource in the N reference signal resource groups is updated by using the resource update message; whether the resource update message indicates one piece of corresponding beam information for each of the N reference signal resource groups; whether the resource update message indicates one piece of corresponding beam information for each reference signal resource included in the N reference signal resource groups; whether the resource update message indicates one piece of corresponding slot information for each of the N reference signal resource groups; whether the resource update message indicates one piece of corresponding slot information for each reference signal resource included in the N reference signal resource groups; whether a variable value of N is supported; or whether the common beam is used for the reference signal resource in the N reference signal resource groups.

In other words, the network device may further configure one or more pieces of the foregoing information for the terminal device by using the RRC message. Alternatively, the network device may configure, for the terminal device, that the resource update message indicates one piece of corresponding beam information for each of the N reference signal resource groups (that is, the first beam indication manner is used), or that the resource update message indicates one piece of corresponding beam information for each reference signal resource included in the N reference signal resource groups (that is, the second beam indication manner is used). Alternatively, the network device may configure, for the terminal device, that the resource update message indicates one piece of corresponding slot information for each of the N reference signal resource groups (that is, the first slot indication manner is used), or that the resource update message indicates one piece of corresponding slot information for each reference signal resource included in the N reference signal resource groups (that is, the second slot indication manner is used).

Optionally, before sending the RRC message to the terminal device, the method further includes: The network device receives terminal capability information, where the terminal capability information indicates one or more of the following: whether updating, by using the resource update message, the information about the reference signal resource in the N reference signal resource groups is supported; whether indicating, by using the resource update message, one piece of corresponding beam information for each of the N reference signal resource groups is supported; whether indicating, by using the resource update message, one piece of corresponding beam information for each reference signal resource included in the N reference signal resource groups is supported; whether indicating, by using the resource update message, one piece of corresponding slot information for each of the N reference signal resource groups is supported; whether indicating, by using the resource update message, one piece of corresponding slot information for each reference signal resource included in the N reference signal resource groups is supported; a supported value of N; whether a variable value of N is supported; or whether using a common beam for the reference signal resource in the N reference signal resource groups is supported.

For whether indicating, by using the resource update message, one piece of corresponding beam information for each of the N reference signal resource groups is supported and whether indicating, by using the resource update message, one piece of corresponding beam information for each reference signal resource included in the N reference signal resource groups is supported, the terminal device may report that it is supported that the resource update message indicates one piece of corresponding beam information for each of the N reference signal resource groups or the resource update message indicates one piece of corresponding beam information for each reference signal resource included in the N reference signal resource groups.

For whether indicating, by using the resource update message, one piece of corresponding slot information for each of the N reference signal resource groups is supported and whether indicating, by using the resource update message, one piece of corresponding slot information for each reference signal resource included in the N reference signal resource groups is supported, the terminal may report that it is supported that the resource update message indicates one piece of corresponding slot information for each of the N reference signal resource groups or the resource update message indicates one piece of corresponding slot information for each reference signal resource included in the N reference signal resource groups.

It should be understood that the information included in the resource update message is merely an example, and should not constitute any limitation on this embodiment of this application. In actual application, the resource update message may further include other information.

FIG. 6 is a detailed schematic flowchart of a resource update method according to an embodiment of this application. The following describes a detailed process of the resource update method with reference to FIG. 6.

Step 610: A terminal device reports terminal capability information to a network device. Correspondingly, the network device receives the terminal capability information from the terminal device. For explanations of the terminal capability information, refer to the foregoing descriptions. Details are not described herein again.

Step 620: The network device sends an RRC message to the terminal, where the RRC message is used for configuring at least one reference signal resource group. Correspondingly, the terminal device receives the RRC message from the network device. For detailed descriptions of the step, refer to step 510. Details are not described herein again.

Step 630: The network device sends a resource update message to the terminal device, where the resource update message is used for updating information about a reference signal resource in N reference signal resource groups in the at least one reference signal resource group. Correspondingly, the terminal device receives the resource update message from the network device. For detailed descriptions of the step, refer to step 520. Details are not described herein again.

Step 640: The network device sends a reference signal to the terminal device based on the resource update message. Correspondingly, the terminal device receives the reference signal.

The network device may send the reference signal to the terminal device based on the information that is about the reference signal resource in the reference signal resource groups and that is indicated by using the resource update message. Correspondingly, the terminal device may receive the reference signal based on the information that is about the reference signal resource in the reference signal resource groups and that is indicated by using the resource update message. It should be understood that in the embodiment in FIG. 6, an example in which the network device sends the reference signal to the terminal device and the terminal device performs measurement is used. However, this should not constitute any limitation on this embodiment of this application. For example, the method provided in this application may also be applicable to uplink reference signal measurement; to be specific, the terminal device sends the reference signal to the network device by using the resource update message, and the network device measures the reference signal.

Step 650: The terminal device measures the reference signal to obtain a measurement result.

Step 660: The terminal device reports the measurement result to the network device.

After obtaining the measurement result, the terminal device reports the measurement result to the network device. For parameters included in the measurement result, refer to the foregoing explanations. Details are not described herein again.

In the foregoing technical solution, the DCI or the MAC-CE is used for updating the reference signal resource in the N reference signal resource groups in the at least one reference signal resource group configured in the RRC message. In comparison with the RRC message, for the DCI and the MAC-CE, latency is lower. In this way, the network device can indicate an updated reference signal resource to the terminal device in a timely manner, to facilitate the terminal device in adjusting a reception beam in a timely manner, improving transmission performance.

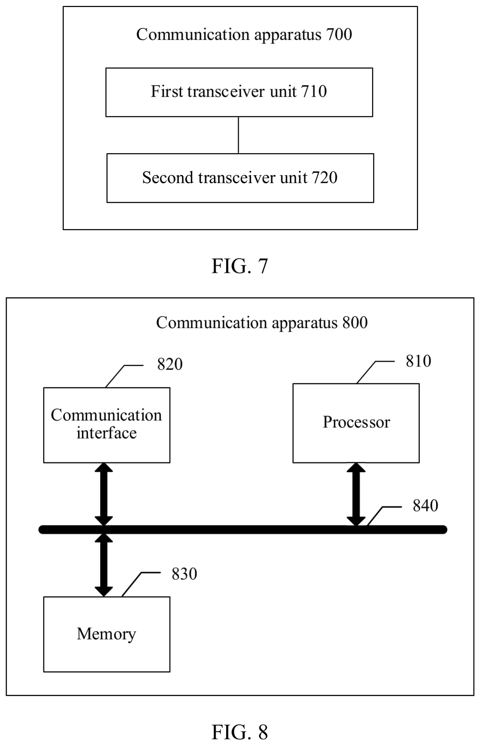

FIG. 7 to FIG. 10 are diagrams of possible structures of communication apparatuses according to embodiments of this application.

FIG. 7 is a block diagram of a communication apparatus 700 according to an embodiment of this application.

As shown in FIG. 7, the communication apparatus 700 includes a first transceiver unit 710 and a second transceiver unit 720.

The apparatus 700 may be configured to implement a function of the terminal device in the method embodiment shown in FIG. 5 or FIG. 6, or the apparatus 700 may be configured to implement a function of the network device in the method embodiment shown in FIG. 5 or FIG. 6.

When the apparatus 700 is configured to implement the function of the terminal device in the method embodiment shown in FIG. 5, the first transceiver unit 710 may be configured to receive an RRC message from the network device, where the RRC message is used for configuring at least one reference signal resource group, and each of the at least one reference signal resource group includes information about at least one reference signal resource; and the second transceiver unit 720 may be configured to receive a resource update message from the network device, where the resource update message is used for updating information about a reference signal resource in N reference signal resource groups in the at least one reference signal resource group, N is a positive integer, and the resource update message is DCI or a MAC-CE.

When the apparatus 700 is configured to implement the function of the network device in the method embodiment shown in FIG. 5, the first transceiver unit 710 may be configured to send an RRC message to the terminal device, where the RRC message is used for configuring at least one reference signal resource group, and each of the at least one reference signal resource group includes at least one reference signal resource; and the second transceiver unit 720 may be configured to send a resource update message to the terminal device, where the resource update message is used for updating information about a reference signal resource in N reference signal resource groups in the at least one reference signal resource group, N is a positive integer, and the resource update message is DCI or a MAC-CE.

For more detailed descriptions of the first transceiver unit 710 and the second transceiver unit 720, directly refer to related descriptions in the method embodiment shown in FIG. 5 or FIG. 6. Details are not described herein again.

It should be understood that division into the units in embodiments of this application is an example, and is merely logical function division, and there may be another division manner in an actual implementation. In addition, functional units in embodiments of this application may be integrated into one processor, or each of the units may exist alone physically, or two or more units may be integrated into one unit. The integrated unit may be implemented in a form of hardware, or may be implemented in a form of a software functional unit.

FIG. 8 is another block diagram of a communication apparatus 800 according to an embodiment of this application. The apparatus 800 may be a chip system, or may be an apparatus configured with a chip system to implement the methods in the foregoing method embodiments. In this embodiment of this application, the chip system may include a chip, or may include a chip and another discrete device.

As shown in FIG. 8, the apparatus 800 may include a processor 810 and a communication interface 820. The communication interface 820 may be configured to communicate with another device by using a transmission medium, so that the apparatus 800 may communicate with another device. The communication interface 820 may be, for example, a transceiver, an interface, a bus, a circuit, or an apparatus that can implement a transceiver function. The processor 810 may input and output data by using the communication interface 820, and is configured to implement the resource update method in the embodiment corresponding to FIG. 5 or FIG. 6. Specifically, the apparatus 800 may be configured to implement functions of the network device or the terminal device in the foregoing method embodiments.

Optionally, the apparatus 800 further includes at least one memory 830, configured to store program instructions and/or data. The memory 830 is coupled to the processor 810. The coupling in this embodiment of this application may be an indirect coupling or a communication connection between apparatuses, units, or modules in an electrical form, a mechanical form, or another form, and is used for information exchange between the apparatuses, the units, or the modules. The processor 810 may cooperate with the memory 830. The processor 810 may execute the program instructions stored in the memory 830. At least one of the at least one memory may be included in the processor.

A specific connection medium between the processor 810, the communication interface 820, and the memory 830 is not limited in this embodiment of this application. In this embodiment of this application, in FIG. 8, the processor 810, the communication interface 820, and the memory 830 are connected through a bus 840. The bus 840 is represented by a bold line in FIG. 8. A connection manner between other components is merely an example for description, and is not limited thereto. The bus may be classified into an address bus, a data bus, a control bus, and the like. For ease of representation, only one bold line is used for representing the bus in FIG. 8, but this does not mean that there is only one bus or only one type of bus.

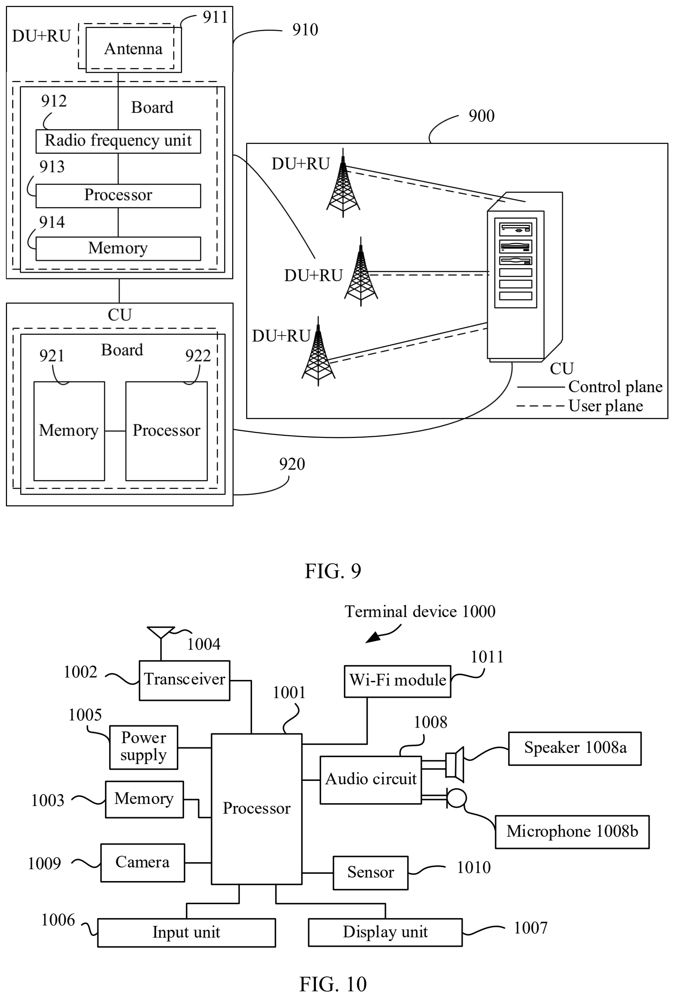

FIG. 9 is a diagram of a structure of a network device according to an embodiment of this application. For example, FIG. 9 may be a diagram of a structure of a base station, and the base station is an example of the network device. As shown in the figure, the base station 900 may include one or more DUs 910 and one or more central units (central unit, CU) 920. The CU 920 may communicate with a next generation core (NG core, NC) network. The DU 910 may include at least one antenna 911, at least one radio frequency unit 912, at least one processor 913, and at least one memory 914. The DU 910 is mainly configured to: send and receive radio frequency signals, perform conversion between the radio frequency signal and a baseband signal, and perform partial baseband processing. The CU 920 may include at least one processor 922 and at least one memory 921. The CU 920 and the DU 910 may communicate with each other through an interface. A control plane (control plane, CP) interface may be Fs-C, for example, F1-C, and a user plane (user plane, UP) interface may be Fs-U, for example, F1-U.

The CU 920 is mainly configured to perform baseband processing, control the base station, and the like. The DU 910 and the CU 920 may be physically disposed together, or may be physically separated, that is, in a distributed base station. The CU 920 is a control center of the base station, may also be referred to as a processing unit, and is mainly configured to implement a baseband processing function. For example, the CU 920 may be configured to control the base station to perform the method performed by the network device in the embodiment shown in FIG. 5 or FIG. 6.

In an instance, the CU 920 may include one or more boards, and a plurality of boards may jointly support a radio access network (for example, a 5G network) of a single access technology, or may separately support radio access networks (for example, an LTE network, a 5G network, or another network) of different access technologies. The memory 921 and the processor 922 may serve one or more boards. In other words, a memory and a processor may be disposed on each board. Alternatively, the plurality of boards may share a same memory and a same processor. In addition, a necessary circuit may be further disposed on each board. The DU 910 may include one or more boards, and a plurality of boards may jointly support a radio access network (for example, a 5G network) of a single access technology, or may separately support radio access networks (for example, an LTE network, a 5G network, or another network) of different access technologies. The memory 914 and the processor 913 may serve one or more boards. In other words, a memory and a processor may be disposed on each board. Alternatively, the plurality of boards may share a same memory and a same processor. In addition, a necessary circuit may be further disposed on each board.

It should be understood that, the base station 900 shown in FIG. 9 is merely a possible architecture of the network device, but shall not constitute any limitation on this application. The method provided in this application is applicable to a network device in another architecture, for example, a network device including a CU, a DU, and an active antenna unit (active antenna unit, AAU). A specific architecture of the network device is not limited in this application.

FIG. 10 is a diagram of a structure of a terminal device 1000 according to an embodiment of this application. The terminal device 1000 may be configured to implement the steps performed by the terminal device in the embodiment shown in FIG. 5 or FIG. 6. As shown in FIG. 10, the terminal device 1000 includes a processor 1001 and a transceiver 1002.

Optionally, the terminal device 1000 further includes a memory 1003. The processor 1001, the transceiver 1002, and the memory 1003 may communicate with each other through an internal connection path, to transmit a control signal and/or a data signal. The memory 1003 is configured to store a computer program. The processor 1001 is configured to invoke the computer program from the memory 1003 and run the computer program, to control the transceiver 1002 to send and receive signals.

Optionally, the terminal device 1000 may further include an antenna 1004, configured to send, by using a radio signal, uplink data or uplink control signaling output by the transceiver 1002. Optionally, the terminal device 1000 further includes a Wi-Fi module 1011, configured to access a wireless network.

The processor 1001 and the memory 1003 may be combined into one processing apparatus, and the processor 1001 is configured to execute program code stored in the memory 1003 to implement the foregoing functions. During specific implementation, the memory 1003 may alternatively be integrated into the processor 1001, or may be independent of the processor 1001.

The transceiver 1002 may correspond to the first transceiver unit 710, the second transceiver unit 720 in FIG. 7, or the communication interface 820 in FIG. 8. The transceiver 1002 may include a receiver machine (or referred to as a receiver or a receiving circuit) and a transmitter machine (or referred to as a transmitter or a transmitting circuit). The receiver machine is configured to receive a signal, and the transmitter machine is configured to transmit a signal.

Optionally, the terminal device 1000 may further include a power supply 1005, configured to supply power to various devices or circuits in the terminal device 1000.

In addition, to improve functions of the terminal device, the terminal device 1000 may further include one or more of an input unit 1006, a display unit 1007, an audio circuit 1008, a camera 1009, a sensor 1010, and the like, and the audio circuit may further include a speaker 1008a, a microphone 1008b, and the like.

It should be understood that operations and/or functions of the modules in the terminal device 1000 are separately intended to implement the corresponding procedures in the foregoing method embodiments. For details, refer to the descriptions in the foregoing method embodiments. To avoid repetition, detailed descriptions are properly omitted herein.

This application further provides a computer program product. The computer program product includes a computer program (which may also be referred to as code or instructions). When the computer program is run, the method in the embodiment shown in FIG. 5 or FIG. 6 may be implemented.

This application further provides a computer-readable storage medium. The computer-readable storage medium stores a computer program (which may also be referred to as code or instructions). When the computer program is run, the method in the embodiment shown in FIG. 5 or FIG. 6 may be implemented.

An embodiment of this application further provides a communication system. The system includes the foregoing terminal device and network device.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and the methods described in this specification includes, but is not limited to, these memories and any memory of another proper type.

Terms such as "unit" and "module" used in this specification may represent computer-related entities, hardware, firmware, combinations of hardware and software, software, or software being executed. The units and the modules in embodiments of this application have a same meaning, and may be used interchangeably.

A person of ordinary skill in the art may be aware that, in combination with embodiments disclosed in this specification, the described illustrative logical blocks (illustrative logical block) and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatuses, devices, and methods may be implemented in other manners. For example, the described apparatus embodiments are merely examples. For example, division into the units is merely logical function division, and there may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In the foregoing embodiments, all or some of the functions of the functional units may be implemented by using software, hardware, firmware, or any combination thereof. When software is used for implementing the embodiments, all or some of the embodiments may be implemented in a form of a computer program product. The computer program product includes one or more computer instructions (programs). When the computer program instructions (programs) are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

When the functions are implemented in the form of a software functional unit and sold or used as an independent product, the functions may be stored in a computer-readable storage medium. Based on such an understanding, the technical solutions of this application essentially, or the part contributing to the technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A resource update method, comprising:

   receiving a radio resource control RRC message from a network device, wherein the RRC message is used for configuring at least one reference signal resource group, and each of the at least one reference signal resource group comprises at least one reference signal resource; and
   receiving a resource update message from the network device, wherein the resource update message is used for updating information about a reference signal resource in N reference signal resource groups in the at least one reference signal resource group, N is a positive integer, and the resource update message is downlink control information DCI or a medium access control MAC-control element CE.

2. The method according to claim 1, wherein the resource update message indicates at least one of the following:

   information used for determining a value of N;
   indexes of the N reference signal resource groups;
   beam information of the reference signal resource in the N reference signal resource groups;
   whether the resource update message indicates beam information of the reference signal resource in the N reference signal resource groups;
   slot information of the reference signal resource in the N reference signal resource groups; or
   periodicity information of the reference signal resource in the N reference signal resource groups.

3. The method according to claim 2, wherein the beam information of the reference signal resource in the N reference signal resource groups is indicated in any one of the following manners: a first beam indication manner or a second beam indication manner; and

   when the first beam indication manner is used for the resource update message, the resource update message indicates one piece of corresponding beam information for each of the N reference signal resource groups; or
   when the second beam indication manner is used for the resource update message, the resource update message indicates one piece of corresponding beam information for each reference signal resource comprised in the N reference signal resource groups.

4. The method according to claim 3, wherein the resource update message further indicates a beam indication manner, and the beam indication manner comprises the first beam indication manner or the second beam indication manner.

5. The method according to any one of claims 2 to 4, wherein the slot information of the reference signal resource in the N reference signal resource groups is indicated in any one of the following manners: a first slot indication manner or a second slot indication manner; and

   when the first slot indication manner is used for the resource update message, the resource update message indicates one piece of corresponding slot information for each of the N reference signal resource groups; or
   when the second slot indication manner is used for the resource update message, the resource update message indicates one piece of corresponding slot information for each reference signal resource comprised in the N reference signal resource groups.

6. The method according to claim 5, wherein the resource update message further indicates a slot indication manner, and the slot indication manner comprises the first slot indication manner or the second slot indication manner.

7. The method according to claim 5 or 6, wherein the slot information is a relative slot offset; and

   when the first slot indication manner is used for the resource update message, a relative slot offset corresponding to each of the N reference signal resource groups is used for updating slot positions of all reference signal resources in the reference signal resource group; or

when the second slot indication manner is used for the resource update message, a relative slot offset corresponding to each reference signal resource is used for updating a slot position of the reference signal resource.

8. The method according to any one of claims 2 to 7, wherein the periodicity information of the reference signal resource in the N reference signal resource groups is indicated in any one of the following manners: a first periodicity indication manner or a second periodicity indication manner; and

when the first periodicity indication manner is used for the resource update message, the resource update message indicates one piece of corresponding periodicity information for each of the N reference signal resource groups; or when the second periodicity indication manner is used for the resource update message, the resource update message indicates one piece of corresponding periodicity information for all reference signal resources comprised in the N reference signal resource groups.

9. The method according to any one of claims 1 to 8, wherein before receiving the resource update message from the network device, the method further comprises:
sending terminal capability information to the network device, wherein the terminal capability information indicates one or more of the following:

whether updating, by using the resource update message, the information about the reference signal resource in the N reference signal resource groups is supported;
whether indicating, by using the resource update message, one piece of corresponding beam information for each of the N reference signal resource groups is supported;
whether indicating, by using the resource update message, one piece of corresponding beam information for each reference signal resource comprised in the N reference signal resource groups is supported;
whether indicating, by using the resource update message, one piece of corresponding slot information for each of the N reference signal resource groups is supported;
whether indicating, by using the resource update message, one piece of corresponding slot information for each reference signal resource comprised in the N reference signal resource groups is supported;

a supported value of N;
whether a variable value of N is supported; or
whether using a common beam for the reference signal resource in the N reference signal resource groups is supported.

10. The method according to any one of claims 1 to 9, wherein the RRC message is further used for configuring one or more of the following:

whether the information about the reference signal resource in the N reference signal resource groups is updated by using the resource update message;
whether the resource update message indicates one piece of corresponding beam information for each of the N reference signal resource groups;
whether the resource update message indicates one piece of corresponding beam information for each reference signal resource comprised in the N reference signal resource groups;
whether the resource update message indicates one piece of corresponding slot information for each of the N reference signal resource groups;
whether the resource update message indicates one piece of corresponding slot information for each reference signal resource comprised in the N reference signal resource groups;
the supported value of N;
whether a variable value of N is supported; or
whether the common beam is used for the reference signal resource in the N reference signal resource groups.

11. A resource update method, comprising:

sending a radio resource control RRC message to a terminal device, wherein the RRC message is used for configuring at least one reference signal resource group, and each of the at least one reference signal resource group comprises at least one reference signal resource; and
sending a resource update message to the terminal device, wherein the resource update message is used for updating information about a reference signal resource in N reference signal resource groups in the at least one reference signal resource group, N is a positive integer, and the resource update message is downlink control information DCI or a medium access control MAC-control element CE.

12. The method according to claim 11, wherein the resource update message indicates at least one of the following:

information used for determining a value of N;

indexes of the N reference signal resource groups;

beam information of the reference signal resource in the N reference signal resource groups;

whether the resource update message indicates beam information of the reference signal resource in the N reference signal resource groups;

slot information of the reference signal resource in the N reference signal resource groups; or

periodicity information of the reference signal resource in the N reference signal resource groups.

13. The method according to claim 12, wherein the beam information of the reference signal resource in the N reference signal resource groups is indicated in any one of the following manners: a first beam indication manner or a second beam indication manner; and

when the first beam indication manner is used for the resource update message, the resource update message indicates one piece of corresponding beam information for each of the N reference signal resource groups; or

when the second beam indication manner is used for the resource update message, the resource update message indicates one piece of corresponding beam information for each reference signal resource comprised in the N reference signal resource groups.

14. The method according to claim 13, wherein the resource update message further indicates a beam indication manner, and the beam indication manner comprises the first beam indication manner or the second beam indication manner.

15. The method according to any one of claims 12 to 14, wherein the slot information of the reference signal resource in the N reference signal resource groups is indicated in any one of the following manners: a first slot indication manner or a second slot indication manner; and

when the first slot indication manner is used for the resource update message, the resource update message indicates one piece of corresponding slot information for each of the N reference signal resource groups; or

when the second slot indication manner is used for the resource update message, the resource update message indicates one piece of corresponding slot information for each reference signal resource comprised in the N reference signal resource groups.

16. The method according to claim 15, wherein the resource update message further indicates a slot indication manner, and the slot indication manner comprises the first slot indication manner or the second slot indication manner.

17. The method according to claim 15 or 16, wherein the slot information is a relative slot offset; and

when the first slot indication manner is used for the resource update message, a relative slot offset corresponding to each of the N reference signal resource groups is used for updating slot positions of all reference signal resources in the reference signal resource group; or

when the second slot indication manner is used for the resource update message, a relative slot offset corresponding to each reference signal resource is used for updating a slot position of the reference signal resource.

18. The method according to any one of claims 12 to 17, wherein the periodicity information of the reference signal resource in the N reference signal resource groups is indicated in any one of the following manners: a first periodicity indication manner or a second periodicity indication manner; and

when the first periodicity indication manner is used for the resource update message, the resource update message indicates one piece of corresponding periodicity information for each of the N reference signal resource groups; or

when the second periodicity indication manner is used for the resource update message, the resource update message indicates one piece of corresponding periodicity information for all reference signal resources comprised in the N reference signal resource groups.

19. The method according to any one of claims 11 to 18, wherein before sending the RRC message to the terminal device, the method further comprises:

receiving terminal capability information, wherein the terminal capability information indicates one or more of the following:

whether updating, by using the resource update message, the information about the reference signal resource in the N reference signal resource groups is supported;

whether indicating, by using the resource update message, one piece of corresponding beam information for each of the N reference signal resource groups is supported;

whether indicating, by using the resource update message, one piece of corresponding beam information for each reference signal resource comprised in the N reference signal resource groups is supported;

whether indicating, by using the resource update message, one piece of corresponding slot information for each of the N reference signal resource groups is supported;

whether indicating, by using the resource update message, one piece of corresponding slot information for each reference signal resource comprised in the N reference signal resource groups is supported;

a supported value of N;

whether a variable value of N is supported; or whether using a common beam for the reference signal resource in the N reference signal resource groups is supported.

20. The method according to any one of claims 11 to 19, wherein the RRC message is further used for configuring one or more of the following:

whether the information about the reference signal resource in the N reference signal resource groups is updated by using the resource update message;

whether the resource update message indicates one piece of corresponding beam information for each of the N reference signal resource groups;

whether the resource update message indicates one piece of corresponding beam information for each reference signal resource comprised in the N reference signal resource groups;

whether the resource update message indicates one piece of corresponding slot information for each of the N reference signal resource groups;

whether the resource update message indicates one piece of corresponding slot information for each reference signal resource comprised in the N reference signal resource groups;

the supported value of N;

whether a variable value of N is supported; or whether the common beam is used for the reference signal resource in the N reference signal resource groups.

21. A communication apparatus, comprising a unit configured to implement the method according to any one of claims 1 to 10, or comprising a unit configured to implement the method according to any one of claims 11 to 20.

22. A communication apparatus, comprising a processor and a memory, wherein

the memory is configured to store a computer program; and
the processor is configured to invoke the computer program, to cause the apparatus to implement the method according to any one of claims 1 to 10 or the method according to any one of claims 11 to 20.

23. A computer-readable storage medium, wherein the storage medium stores a computer program or instructions, and when the computer program or the instructions are executed by a computer, the method according to any one of claims 1 to 10 or the method according to any one of claims 11 to 20 is implemented.

24. A computer program product, wherein the computer program product comprises instructions, and when the instructions are run by a computer, the method according to any one of claims 1 to 10 or the method according to any one of claims 11 to 20 is implemented.

FIG. 1

Network
device

Send a CSI-RS
on a
CSI-RS resource
configured by
using an RRC
message

Update the
CSI-RS
resource by
using the RRC
message

Send a
CSI-RS on
an updated
CSI-RS
resource

Report a
measurement
result

Terminal
device

Report a
measurement result

CSI-RS
measurement

CSI-RS
measurement

FIG. 2

(a)

(b)

FIG. 3

FIG. 4

500

| Network device | | Terminal device |

510: RRC message, where the RRC message is used for configuring at least one reference signal resource group

520: Resource update message, where the resource update message is used for updating information about a reference signal resource in N reference signal resource groups in the at least one reference signal resource group

FIG. 5

| Network device | | Terminal device |

610: Terminal capability information

620: RRC message, where the RRC message is used for configuring at least one reference signal resource group

630: Resource update message, where the resource update message is used for updating information about a reference signal resource in N reference signal resource groups in the at least one reference signal resource group

640: Reference signal

650: Measure the reference signal to obtain a measurement result

660: Measurement result

FIG. 6

Communication apparatus 700

First transceiver unit 710

Second transceiver unit 720

FIG. 7

Communication apparatus 800

820

810

Communication interface

Processor

840

830

Memory

FIG. 8

FIG. 9

FIG. 10

## INTERNATIONAL SEARCH REPORT

| International application No. |
| --- |
| **PCT/CN2024/103325** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

3GPP, CNTXT, ENTXTC, VEN, CNKI: 参考信号资源, 改变, 更改, 更新, 刷新, 替换, 及时, 时延, 资源, DCI, DMRS, RRC, SRS, SSB, replac+, "CS-RS", "CSI-RS", updat+, "mac-ce", chang+, refresh+, "US-RS"

### C. DOCUMENTS CONSIDERED TO BE RELEVANT

| Category* | Citation of document, with indication, where appropriate, of the relevant passages | Relevant to claim No. |
| --- | --- | --- |
| X | CN 116158007 A (QUALCOMM INC.) 23 May 2023 (2023-05-23) description, paragraphs 25 and 94-96 | 1-24 |
| X | CN 112514315 A (SAMSUNG ELECTRONICS CO., LTD.) 16 March 2021 (2021-03-16) description, paragraphs 142-144 | 1-24 |
| A | CN 116195215 A (BEIJING XIAOMI MOBILE SOFTWARE CO., LTD.) 30 May 2023 (2023-05-30) entire document | 1-24 |
| A | US 2021184738 A1 (QUALCOMM INC.) 17 June 2021 (2021-06-17) entire document | 1-24 |
| A | CN 115804199 A (NTT DOCOMO INC.) 14 March 2023 (2023-03-14) entire document | 1-24 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **2024年9月6日** | **30 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/103325**

| Patent document cited in search report | | | Publication date (day/month/year) | Patent family member(s) | | | Publication date (day/month/year) |
|---|---|---|---|---|---|---|---|
| CN | 116158007 | A | 23 May 2023 | US | 2022021498 | A1 | 20 January 2022 |
| | | | | US | 11791961 | B2 | 17 October 2023 |
| | | | | EP | 4183094 | A1 | 24 May 2023 |
| | | | | WO | 2022020348 | A1 | 27 January 2022 |
| CN | 112514315 | A | 16 March 2021 | EP | 3827548 | A1 | 02 June 2021 |
| | | | | EP | 3827548 | A4 | 29 September 2021 |
| | | | | US | 2021226745 | A1 | 22 July 2021 |
| | | | | US | 11641258 | B2 | 02 May 2023 |
| | | | | WO | 2020027594 | A1 | 06 February 2020 |
| | | | | KR | 20210029281 | A | 15 March 2021 |
| | | | | US | 2020044797 | A1 | 06 February 2020 |
| | | | | US | 10972244 | B2 | 06 April 2021 |
| CN | 116195215 | A | 30 May 2023 | None | | | |
| US | 2021184738 | A1 | 17 June 2021 | EP | 4078838 | A1 | 26 October 2022 |
| | | | | WO | 2021126721 | A1 | 24 June 2021 |
| | | | | US | 12063085 | B2 | 13 August 2024 |
| CN | 115804199 | A | 14 March 2023 | None | | | |

Form PCT/ISA/210 (patent family annex) (July 2022)

REFERENCES CITED IN THE DESCRIPTION

**Patent documents cited in the description**

- CN 202310879459